# EUROPÄISCHE PATENTANMELDUNG

(11) **EP 1 264 835 A1**
(43) Veröffentlichungstag der Anmeldung: **11.12.2002**
(21) Anmeldenummer: 02011576.2
(22) Anmeldetag: 27.05.2002
(51) Int. Cl.: C07F 17/00

(54) **1,3-disubstituierte Indenkomplexe**

(30) Priorität: 08.06.2001 DE 10127926
(71) Anmelder: BAYER AG, 51368 Leverkusen (DE)
(72) Erfinder: Becke, Sigurd, Dr., 51503 Rösrath (DE); Weiss, Thomas, Dr., 68259 Mannheim-Freudenheim (DE); Lang, Heinrich, Prof., 09125 Chemnitz-Harthau (DE)

(57) **Zusammenfassung**

Die vorliegende Erfindung betrifft metallorganische Verbindungen von Übergangsmetallen mit einem in 2-Position gebundenen und in 1,3-Position substituierten Indenyl-Liganden, ein Verfahren zu ihrer Herstellung und ihre Verwendung als Katalysatoren zur (Co)Polymerisation von olefinischen und/oder diolefinischen Monomeren.

## Beschreibung

Die vorliegende Erfindung betrifft metallorganische Verbindungen von Übergangsmetallen mit einem in 2-Position gebundenen und in 1,3-Position substituierten Indenyl-Liganden, ein Verfahren zu ihrer Herstellung und ihre Verwendung als Katalysatoren zur (Co)Polymerisation von olefinischen und/oder diolefinischen Monomeren.

Entprechend der IUPAC-Nomenklatur werden die Positionen der Ringatome des Indens in der vorliegenden Anmeldung wie folgt bezeichnet:

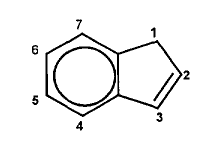

Die Herstellung von substituierten Indenen [Spaleck, W.; Rohrmann, J.; Antberg, M.; EP- A1-0 530 647] ist in der einschlägigen Literatur bekannt und gelingt zum Beispiel ausgehend von 1-Indanonen [Smonou, I.; Ofranopopuolos, M. Synth. Commun. 1990, 20 (9), 1387].

Die Synthese von 2-Bromindenen lehnt sich an bekannte Verfahren zu deren Herstellung an [Billups, W.; J. Org. Chem. 1980, 23, 4638; Porter, H.D.; Suter, C.M. J. Am. Chem. Soc. 1935, 57, 2022; Koelsch, C. J. Org. Chem. 1960, 25, 130; Weiß, R.; Luft, S.; Monatsh. Chem. 1927, 48, 341].

Stereorigide chirale Metallocene mit verbrückten Indenylliganden als Katalysatoren zur Herstellung von Polyolefinen sind bekannt. Dabei hat sich erwiesen, dass Art und Position der Substituenten am Indenylanion und Art und Position der Verbrückung einen Einfluß sowohl auf die Katalysatoraktivität, als auch auf die Polymereigenschaften besitzt. Viele der Indenyl-Metallocene weisen eine Verbrückung in 1-Position auf (1-Indenyl-Metallocene).

Besondere Bedeutung besitzen die in 2 und/oder 4 Position substituierten Bis(1-indenyl)-Metallocene mit in 1-Position verbrückten Indenylresten zur Herstellung von hochisotaktischem Polypropylen mit hoher Kristallinität und hohem Schmelzpunkt. (EP-A1-485 821, EP-A1-485 823, EP-A2-519237). Ebenso von Bedeutung sind die in 4,5-Position benzanellierten Bis(1-indenyl)-Metallocene (siehe Organometallics 1994, 13, 964-970).

Es ist auch bekannt, metallorganische Verbindungen mit nur einem Indenylanion als Katalysatoren einzusetzen (Constrained Geometry Komplexe mit 1-Indenylliganden, siehe US-A-5, 026, 798, WO-97/15583-A1).

Aus WO-94/11 406-A1 sind metallorganische Verbindungen von Übergangsmetallen bekannt, die einen Indenyl- und einen Cyclopentadienyl-Liganden aufweisen, wobei der Indenyl-Ligand in der 2-Position substituiert ist; dieser Substituent kann auch als Brücke zum 2. Liganden ausgebildet sein. Die Ausführungsbeispiele zeigen vielstufige Herstellungen mit äußerst unbefriedigenden Ausbeuten, die bei verbrückten Verbindungen zu 1-Cyclopentadienyl-2-(2-indenyl)-ethan-zirkoniumchlorid, zu Bis-(2-indenyl)-methan-zirkoniumdichlorid oder zu Dimethyl-bis-(2-indenyl)-silan-zirkoniumdichlorid, welches noch Verunreinigungen enthält, führen. In Organometallics 1993, 12, 5012-5015 wird ein mehrstufiger Syntheseweg zu Ethylenbis(2-indenyl)-titandichlorid beschrieben. Aufgrund der vielstufigen Synthese und der zahlreichen Reinigungsoperationen ist die erzielbare Ausbeute sehr gering. Bedingt durch den Syntheseweg ist die Strukturvielfalt auf Ethylen-verbrückte Liganden eingeschränkt.

In EP-A2-941 997 werden Ethylen-verbrückte Bis(2-indenyl)zirkonocene offengelegt. Diese Zirkonocene werden zur Herstellung von speziellen Polyolefinen mit niedrigen Molekulargewichten eingesetzt.

In EP-A1-0 940 408 werden silylverbrückte 2-Indenyl-Metallocene und ein Verfahren zur Herstellung von metallorganischen Verbindungen mit einem in 2-Position gebundenen Indenyl-Liganden beschrieben.

Des weiteren wird in US-A-5,504,169 ein Verfahren zur Herstellung von amorphen Polypropylenen mit einem Katalysatorsystem auf Basis von Monocyclopentadienyl-Übergangsmetallkomplexen beschrieben. Der am Übergangsmetallkomplex gebundene Cyclopentadienyl-Ring ist mit null, zwei oder vier Substituenten symmetrisch substituiert.

Übergangsmetallkomplexe mit in 2-Position verbrückten, 1,3-disubstituierten Indenyl-Liganden sind nicht bekannt.

Es hat sich nun gezeigt, dass solche metallorganische Katalysatoren, deren Verbrückung an der 2-Position mindestens eines 1,3-disubstituierten Indenylanions ansetzt, besondere Eigenschaften als Polymerisationskatalysatoren haben; sie erzeugen nämlich bei der (Co)Polymerisation von α-Olefinen weitgehend ataktische Polymere mit hohen Molekulargewichten. Es war daher wünschenswert, ein Herstellungsverfahren für solche in der 2-Position mindestens eines 1,3-disubstituierten Indenylanions verbrückte Katalysatoren zu finden.

Eine weitere Aufgabe bestand darin, einen Katalysator zur Verfügung zu stellen, der für die Synthese von hochmolekularem EPDM geeignet ist.

Die vorliegende Erfindung betrifft ein Verfahren zur Herstellung von metallorganischen Verbindungen von Übergangsmetallen mit in 1,3-Position substituierten 2-Indenyl Liganden, welche der allgemeinen Formel (I) entsprechen, 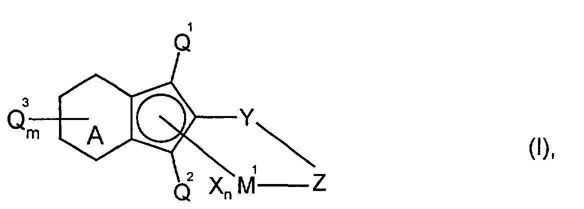 worin
- A: das Benzosystem oder das Tetrahydrocyclohexylsystem bedeutet,
- Q¹, Q²: gleich oder verschieden sind und als Substituent des in 1,3-Position substituiertem 2-Indenylsystems Wasserstoff, C₁-C₄-Alkyl, C₆-C₁₄-Aryl, C₇-C₁₀-Aralkyl, C₁-C₄-Alkoxy, C₁-C₄-Alkylthio, Phenoxy, Phenylthio, Di-C₁-C₄-alkyl-amino, C₆-C₁₄-Aryl-C₁-C₄-alkyl-amino, Di-C₆-C₁₄-aryl-amino, Dibenzylamino, Tri-C₁-C₄-alkyl-silyl, Di-C₁-C₄-alkyl-boranyl, Phenyl-C₁-C₄-alkyl-boranyl, Diphenylboranyl, Di-C₁-C₄-alkyl-phosphoryl, Diphenylphosphoryl oder Phenyl-C₁-C₄-alkyl-phosphoryl bedeuten,
- Q³: gleich oder verschieden sind und als Substituent des in 4, 5, 6, 7 -Position substituiertem 2-Indenylsystems Wasserstoff, C₁-C₄-Alkyl, C₆-C₁₄-Aryl, C₇-C₁₀-Aralkyl, C₁-C₄-Alkoxy, C₁-C₄-Alkylthio, Phenoxy, Phenylthio, Di-C₁-C₄-alkyl-amino, C₆-C₁₄-Aryl-C₁-C₄-alkyl-amino, Di-C₆-C₁₄-aryl-amino, Dibenzylamino, Tri-C₁-C₄-alkyl-silyl, Di-C₁-C₄-alkyl-boranyl, Phenyl-C₁-C₄-alkyl-boranyl, Diphenylboranyl, Di-C₁-C₄-alkyl-phosphoryl, Diphenylphosphoryl oder Phenyl-C₁-C₄-alkyl-phosphoryl bedeuten,
- M¹: ein Übergangsmetall aus der 4., 5. oder 6. Gruppe des Periodensystems der Elemente nach IUPAC 1985 ist,
- X: ein Anion bedeutet,
- n: eine Zahl von Null bis Vier ist, die sich aus der Valenz und dem Bindungszustand von M¹ ergibt,
- m: eine Zahl von Null bis Vier ist, die sich aus der Zahl der Reste Q³ ergibt,
- Y: eine Brücke aus der Gruppe von -C(R¹R²)-, -Si(R¹R²)-, -Ge(R¹R²)-, -C(R¹R²)-C(R³R⁴)-, -C(R¹R²)-Si(R³R⁴)- oder -Si(R¹R²)-Si(R³R⁴)- darstellt, worin R¹, R², R³ und R⁴ unabhängig voneinander Wasserstoff, Halogen, geradkettiges oder verzweigtes C₁-C₁₀-Alkyl, C₅-C₈-Cycloalkyl, C₆-C₁₄-Aryl oder C₇-C₁₀-Aralkyl bedeuten, und
- Z: ein zweiter Ligand aus der Gruppe von offenkettigen und cyclischen, gegebenenfalls anionischen π-Systemen, -N(R⁵)-, -P(R6)-, |N(R⁵R⁷)-, |P(R⁶R⁸)-, -O-, -S-, OR⁵- oder |SR⁵- ist, wobei der senkrechte Strich links vom Elementsymbol N, P, O bzw. S ein Elektronenpaar bedeutet und die Bindung zwischen Z und M¹ ionischen, kovalenten oder koordinativen Charakter hat und worin R⁵, R⁶, R⁷ und R⁸ unabhängig voneinander den Bedeutungsumfang von R¹ bis R⁴ haben und R⁵ und R⁷ zusätzlich -Si(R¹R²R³) bedeuten können und R6 und R8 zusätzlich -Si(R¹R²R³), -OR¹, -SR¹ oder -N(R¹R²) bedeuten können,
dadurch gekennzeichnet, dass man ein in 1,3 Position substituiertes Halogeninden der Formel (II) 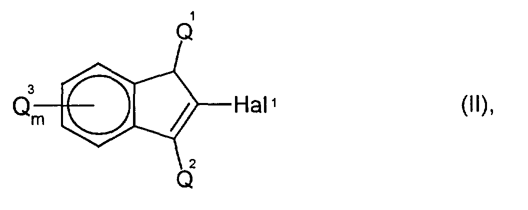 in der Hal¹ für Cl, Br oder I steht und Q¹, Q² und Q³ bzw. m die obige Bedeutung haben,
mit einem elementaren Metall ausgewählt aus der 1., 2. oder 12. Gruppe des Periodensystems nach IUPAC 1985 oder einer entsprechenden Metallverbindung in einer Menge im Bereich von 1 bis 100 Mol elementares Metall/Metallverbindung pro Mol (II) mit einem Dihalogenid der Brücke Y der Formel

Hal² - Y - Hal³ (III),

in der
Hal² und Hal³ unabhängig voneinander Cl, Br oder I bedeuten und
- Y: den obigen Bedeutungsumfang hat,
in einer Menge von 1 bis 20 Mol (III) pro Mol (II) umsetzt, wobei in dem Fall, dass Y die Bedeutung -Si(R¹R²)-, -Ge(R¹R²)- oder -Si(R¹R²)-Si(R³R⁴)- hat, die Umsetzung von (II) mit (i) elementares Metall/Metallverbindung und (ii) mit (III) auch simultan erfolgen kann, und das Reaktionsprodukt der Formel 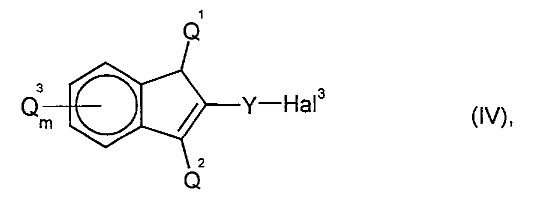 worin Q¹, Q², Q³, Y und Hal³ die obige Bedeutung haben,
gegebenenfalls nach seiner Isolierung mit einem Z-Derivat der Formel
ZM²ₚ (Va) oder ZR⁹ₚ (Vb),
in welcher
- M²: für Li, Na, K oder -MgHal⁴, worin Hal⁴ den Bedeutungsumfang von Hal² hat, steht,
- p: die Zahl Eins oder Zwei darstellt,
- R⁹: Wasserstoff, -Si(R¹R²R³) oder Sn(R¹R²R³) darstellt und
- Z, R¹, R² und R³: die obige Bedeutung haben,
unter Austritt einer Verbindung der Formel
M²Hal³ (VIa) bzw. R⁹Hal³ (VIb),
in welcher M², R⁹ und Hal³ die obige Bedeutung haben,
gegebenenfalls in Gegenwart einer Hilfsbase zur 2-Indenyl-Verbindung der Formel 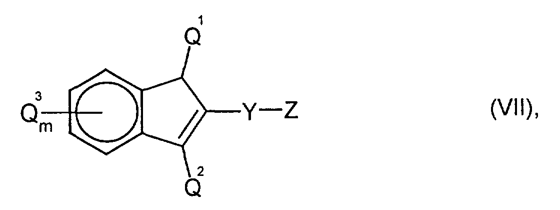 in der Q¹, Q², Q³, Y, Z und m die obige Bedeutung haben und die als Dianion vorliegen kann und in der Z weiterhin M², R⁹ oder ein Elektronenpaar tragen kann,
und dann weiter mit einer Übergangsmetallverbindung der Formel

M¹X_{q} (VIII),

umsetzt, in der
- M¹ und X: die obige Bedeutung haben und
- q: eine Zahl von Zwei bis Sechs ist, die sich aus der Oxidationsstufe von M¹ ergibt.

Das Verfahren wird vorteilhaft bei Temperaturen im Bereich von -100 bis 120°C durchgeführt.

Als Metalle der Gruppen 1, 2 oder 12 seien insbesondere Lithium, Kalium, Natrium, Magnesium, Calcium, Zink, Cadmium und Quecksilber genannt. Bevorzugt werden die Metalle der Gruppen 2 und 12. Es kann auch vorteilhaft sein, die Metalle in einem Gemisch untereinander einzusetzen.

Als entsprechende Metallverbindungen seien Butyl-Lithium, Butadien-Magnesium Anthracen-Magnesium sowie die entsprechenden Verbindungen der anderen genannten Metalle genannt.

Es kann vorteilhaft sein, die nicht umgesetzten Metalle/Metallverbindungen vor Zugabe von (III) abzutrennen.

In der Regel werden bei Umsetzung mit (III) die entsprechenden Metallhalogenide Metall Hal¹Hal² gebildet.

Weiterhin werden im Regelfall bei Zugabe von (Va) oder (Vb) die entsprechenden Verbindungen der Formeln

M²Hal³ (VIa)

bzw.

R⁹Ral (VIb),

in welchen
M², R⁹ und Hal³ die bekannten Bedeutungen haben,
gebildet.

Die Erfindung betrifft weiterhin die mit dem genannten Verfahren herstellbaren metallorganischen Verbindungen von Übergangsmetallen mit in 1,3-Position substituierten 2-Indenyl als Liganden, welche der allgemeinen Formel (I) entsprechen, 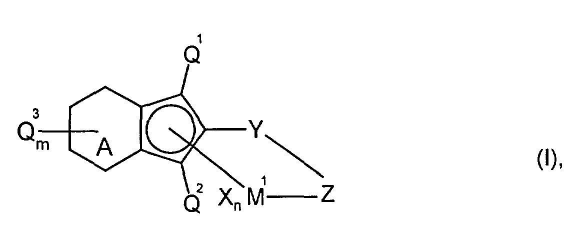 worin
- A: das Benzosystem oder das Tetrahydrocyclohexylsystem bedeutet,
- Q¹, Q²: gleich oder verschieden sind und als Substituent des in 1,3-Position substituiertem 2-Indenylsystems Wasserstoff, C₁-C₄-Alkyl, C₆-C₁₄-Aryl, C₇-C₁₀-Aralkyl, C₁-C₄-Alkoxy, C₁-C₄-Alkylthio, Phenoxy, Phenylthio, Di-C₁-C₄-alkyl-amino, C₆-C₁₄-Aryl-C₁-C₄-alkyl-amino, Di-C₆-C₁₄-aryl-amino, Dibenzylamino, Tri-C₁-C₄-alkyl-silyl, Di-C₁-C₄-alkyl-boranyl, Phenyl-C₁-C₄-alkyl-boranyl, Diphenylboranyl, Di-C₁-C₄-alkyl-phosphoryl, Diphenylphosphoryl oder Phenyl-C₁-C₄-alkyl-phosphoryl bedeuten,
- Q³: gleich oder verschieden sind und als Substituent des in 4, 5, 6, 7 -Position substituiertem 2-Indenylsystems Wasserstoff, C₁-C₄-Alkyl, C₆-C₁₄-Aryl, C₇-C₁₀-Aralkyl, C₁-C₄-Alkoxy, C₁-C₄-Alkylthio, Phenoxy, Phenylthio, Di-C₁-C₄-alkyl-amino, C₆-C₁₄-Aryl-C₁-C₄-alkyl-amino, Di-C₆-C₁₄-aryl-amino, Dibenzylamino, Tri-C₁-C₄-alkyl-silyl, Di-C₁-C₄-alkyl-boranyl, Phenyl-C₁-C₄-alkyl-boranyl, Diphenylboranyl, Di-C₁-C₄-alkyl-phosphoryl, Diphenylphosphoryl oder Phenyl-C₁-C₄-alkyl-phosphoryl bedeuten,
- M¹: ein Übergangsmetall aus der 4., 5. oder 6. Gruppe des Periodensystems der Elemente nach IUPAC 1985 ist,
- X: ein Anion bedeutet,
- n: eine Zahl von Null bis Vier ist, die sich aus der Valenz und dem Bindungszustand von M¹ ergibt,
- m: eine Zahl von Null bis Vier ist, die sich aus der Zahl der Reste Q³ ergibt,
- Y: eine Brücke aus der Gruppe von -C(R¹R²)-, -Si(R¹R²)-, -Ge(R¹R²)-, -C(R¹R²)-C(R³R⁴)-, -C(R¹R²)-Si(R³R⁴)- oder -Si(R¹R²)-Si(R³R⁴)- darstellt, worin R¹, R², R³ und R⁴ unabhängig voneinander Wasserstoff, Halogen, geradkettiges oder verzweigtes C₁-C₁₀-Alkyl, C₅-C₈-Cycloalkyl, C₆-C₁₄-Aryl oder C₇-C₁₀-Aralkyl bedeuten, und
- Z: ein zweiter Ligand aus der Gruppe von offenkettigen und cyclischen, gegebenenfalls anionischen π-Systemen, -N(R⁵)-, -P(R⁶)-, |N(R⁵R⁷)-, |P(R⁶R⁸)-, -O-, -S-, |OR⁵- oder |SR⁵- ist, wobei der senkrechte Strich links vom Elementsymbol N, P, O bzw. S ein Elektronenpaar bedeutet und die Bindung zwischen Z und M¹ ionischen, kovalenten oder koordinativen Charakter hat und worin R⁵, R⁶, R⁷ und R⁸ unabhängig voneinander den Bedeutungsumfang von R¹ bis R⁴ haben und R⁵ und R⁷ zusätzlich -Si(R¹R²R³) bedeuten können und R⁶ und R⁸ zusätzlich -Si(R¹R²R³), -OR¹, -SR¹ oder -N(R¹R²) bedeuten können.

Die Erfindung betrifft weiterhin die Verwendung der Verbindungen gemäß Formel (I) als Katalysatoren sowohl auf einem Katalysatorträger (z.B. Al₂O₃, SiO₂ und andere inerte) als auch ohne Träger zur Polymerisation von Monomeren aus der Gruppe von C₂-C₆-α-Olefinen, C₄-C₆-Diolefinen und Cyclo(di)olefinen oder zur Copolymerisation mehrerer der genannten Monomeren, insbesondere zur Herstellung amorpher, weitgehend ataktischer Polymerer.

Die Erfindung betrifft in bevorzugter Weise das beschriebene Verfahren und die damit herstellbaren Verbindungen der Formel (I), worin Y die Bedeutung -Si(R¹R²)-, -Ge(R¹R²)- oder -Si(R¹R²)-Si(R³R⁴)-, besonders bevorzugt -Si(R¹R²)- hat und die Umsetzung von (II) mit (i) Mg bzw. Zn und (ii) mit (III) zum Reaktionsprodukt (IV) simultan erfolgt.

Die Erfindung betrifft weiterhin Zwischenprodukte der Formel 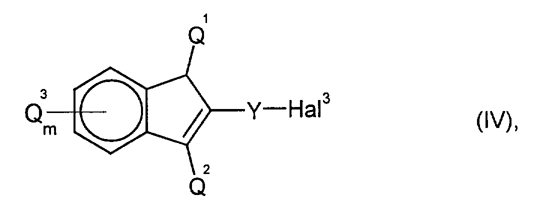 worin Q¹, Q², Q³, Y und Hal³ die oben genannte Bedeutung haben.

Cyclische π-Systeme im Rahmen der Bedeutung von Z sind beispielsweise substituiertes oder nicht substituiertes Cyclopentadien, substituiertes oder nicht substituiertes 1-Inden, substituiertes oder nicht substituiertes 2-Inden, substituiertes oder nicht substituiertes Fluoren, die mit der Brücke Y kovalent und mit M¹ ionisch, kovalent oder koordinativ gebunden sind.

Die Erfindung betrifft in bevorzugter Weise das erfindungsgemäße Verfahren und erfindungsgemäße metallorganische Verbindungen von Übergangsmetallen der Formel (I), in der jedoch an die Stelle von Z das zweite Z' tritt, der die Bedeutung substituiertes oder nicht substituiertes Cyclopentadien, substituiertes oder nicht substituiertes 1-Inden, substituiertes oder nicht substituiertes 2-Inden, substituiertes oder nicht substituiertes Fluoren, -N(R⁵)-, -P(R⁶)-, |N(R⁵R⁷)-, |P(R⁶R⁸)-, -O-, -S-, |OR⁵oder |SR⁵- hat, worin R⁵ bis R⁸ und die senkrechten Striche die obengenannte Bedeutung haben.

Weiterhin bevorzugt sind solche mit der Formel Z" mit dem Bedeutungsumfang von -N(R⁵)- oder |N(R⁵R⁷)-, insbesondere in Verbindung mit Y = -Si(R¹R²)- und M¹ = Ti oder Zr.

Geradkettiges oder verzweigtes C₁-C₁₀-Alkyl ist beispielsweise Methyl, Ethyl, Propyl, Isopropyl, Butyl, Isobutyl, tert.-Butyl, die isomeren Pentyle, Hexyle, Octyle oder Decyle. Bevorzugt ist C₁-C₄-Alkyl, besonders bevorzugt sind Methyl und Ethyl.

C₅-C₈-Cycloalkyl ist beispielsweise Cyclopentyl, Methyl-cyclopentyl, Dimethylcyclopentyl, Cyclohexyl, Methyl-cyclohexyl, Dimethyl-cyclohexyl, Cycloheptyl, Cyclooctyl, bevorzugt Cyclopentyl und Cyclohexyl und ihre Methyl- und Dimethyl-Derivate.

C₆-C₁₄-Aryl ist beispielsweise Phenyl, Naphthyl, Biphenylyl, Anthryl, Phenanthryl, bevorzugt Phenyl.

C₇-C₁₀-Aralkyl ist beispielsweise Benzyl, α- oder β-Phenyl-ethyl, Phenyl-propyl oder Phenyl-butyl.

C₁-C₄-Alkoxy bzw. C₁-C₄-Alkylthio sind beispielsweise Methoxy, Methylthio, Ethoxy, Ethylthio, Propoxy, Propylthio, Isopropoxy, Isopropylthio, Butoxy, Butylthio, Isobutoxy und Isobutylthio.

Aryl bzw. die aromatischen Anteile von Aralkyl können 1- oder 2-fach, gleich oder unterschiedlich durch Fluor, Chlor, Brom, Methyl, Ethyl, Methoxy oder Ethoxy substituiert sein.

Q³ ist beispielsweise - H oder CH₃-, in den Positionen 4, 5, 6, 7 .

Halogen im Rahmen von R¹ bis R⁸ ist beispielsweise Fluor, Chlor, Brom oder verschiedene von ihnen, bevorzugt Chlor.

M¹ ist beispielsweise Ti, Zr, Hf, V, Nb, Ta, Cr, W, Mo, bevorzugt Ti, Zr, Hf, V, Nb, besonders bevorzugt Ti, Zr, Hf, ganz besonders bevorzugt Ti, Zr. M¹ kann sowohl in der höchstmöglichen Oxidationsstufe als auch in einer davon abweichenden niedrigeren Oxidationsstufe eingesetzt werden und so in den metallorganischen Verbindungen auftreten. In vielen Fällen ist es vorteilhaft, M¹ zunächst in einer niederen Oxidationsstufe einzusetzen und danach mit einem milden Oxidationsmittel, beispielsweise PbCl₂, aufzuoxidieren.

X ist ein einfach oder mehrfach geladenes Anion aus der Gruppe von Fluorid, Chlorid, Bromid, C₁-C₄-Carboxylat, Amid, C₁-C₄-Alkyl, Phenyl, Benzyl, Neopentyl und substituiertes oder nicht substituiertes Butadienyl, bevorzugt Chlorid oder Fluorid, es können auch verschiedene der genannten Anionen vorliegen.

Hal¹, Hal² und Hal³ im Rahmen von (II) und (III) sind unabhängig voneinander Cl, Br oder I, bevorzugt sind Hal¹ Br und Hal² und Hal³ Cl oder Br.

Die Temperatur zur Umsetzung von (II) mit Mg oder Zn liegt im Bereich von -20°C bis +120°C, bevorzugt 0°C bis +100°C, besonders bevorzugt +25°C bis +80°C.

Die Menge Mg bzw. Zn beträgt 1 bis 100 Mol pro Mol (II). Grundsätzlich kann auch mit Mengen außerhalb des genannten Bereiches gearbeitet werden. Unterhalb von 1 Mol Mg bzw. Zn pro Mol (II) ist die Umsetzung von (II) unvollständig und oberhalb von 100 Mol ist kein weiterer Vorteil bezüglich Vollständigkeit und Geschwindigkeit der Umsetzung zu erwarten. In bevorzugter Weise werden 1 bis 10 Mol Mg bzw. Zn, in besonders bevorzugter Weise 1 bis 5 Mol Mg bzw. Zn pro Mol (II) eingesetzt. Von den Metallen Mg und Zn ist Mg zur Umsetzung bevorzugt.

Die Temperatur zur weiteren Umsetzung mit (III) liegt ebenfalls im Bereich von -20°C bis +120°C, bevorzugt 0°C bis +100°C, besonders bevorzugt +25°C bis +80°C.

Die Menge von (III) beträgt 1 bis 20 Mol pro Mol (II). In Mengen außerhalb dieses Bereiches gilt das oben zur Menge an Mg bzw. Zn Gesagte. In bevorzugter Weise werden 1 bis 10 Mol (III), in besonders bevorzugter Weise 1 bis 2 Mol (III) pro Mol (II) eingesetzt.

Nicht umgesetztes Mg bzw. Zn und (III) werden auf fachmännisch bekannte Weise vom Reaktionsansatz abgetrennt und können erneut eingesetzt werden.

Das erfindungsgemäße Verfahren kann in Gegenwart eines polaren, aprotischen Lösungsmittels durchgeführt werden. Geeignete Lösungsmittels sind beispielsweise Methylenchlorid, Chloroform, Dimethylformamid, N-Methyl-pyrrolidon und Ether. Hiervon sind die Ether bevorzugt, beispielsweise Diethylether, Diisopropylether, Dioxan, Tetrahydrofuran und andere dem Fachmann bekannte. Die Menge Lösungsmittel wird so gewählt, dass (II) und die daraus entstehende Mg-organische bzw. Znorganische Verbindung gelöst vorliegen und das nicht umgesetzte Mg bzw. Zn etwa durch Filtration oder Dekantieren oder analoge Trennoperation abgetrennt werden kann. Diese Menge beträgt beispielsweise 50 bis 1000 % der Menge von (II).

Y ist in bevorzugter Weise -C(R¹R²)-, -Si(R¹R²)-, besonders bevorzugt -Si(R¹R²)-.

Für den Fall, dass Y die Bedeutung -Si(R¹R²)-, -Ge(R¹R²)- oder -Si(R¹R²)-Si(R³R⁴)- hat, eröffnet die simultane Umsetzung von (II) mit (i) Mg bzw. Zn und (ii) mit (III) eine elegante Möglichkeit der Einsparung eines Reaktionsschrittes.

Für den Fall, dass die Umsetzung von (IV) mit (Va) oder (Vb) zu (VII) in Gegenwart einer Hilfsbase durchgeführt wird, kommen hierfür beispielsweise in Betracht: Offenkettige oder cyclische tertiäre aliphatische Amine mit insgesamt 3 bis 30 C-Atomen, wie Trimethylamin, Triethylamin, Tripropylamin, Triisopropylamin, Tributylamin, Triisobutylamin, Trihexylamin, Trioctylamin, Tridecylamin, N-Methylpiperidin, N,N'-Dimethyl-piperazin, Diaza-bicyclo-nonan (DBN), Diazabicycloundecan (DBU), auch Amine mit unterschiedlich langen C-Ketten, wie N,N-Dimethyl-butylamin, N,N-Dimethyl-octylamin, N,N-Dimethyl-stearylamin und ähnliche, und aromatische Amine, wie Pyridin, Methylpyridine, Chinolin, N,N-Dimethyl-anilin und ähnliche.

Die Aufarbeitung des die metallorganische Verbindung (I) enthaltenden Reaktionsgemisches erfolgt mit fachmännisch bekannten Operationen, wie Filtration, Abdestillieren flüchtiger Gemischanteile und Kristallisation.

Die Erfindung betrifft weiterhin die Verwendung der Verbindungen gemäß Formel (I) als Katalysatoren sowohl auf einem Katalysatorträger (z.B. Al₂O₃, SiO₂ und andere inerte) als auch ohne Träger zur Polymerisation von Monomeren aus der Gruppe von C₂-C₆-α-Olefinen, C₄-C₆-Diolefinen und Cyclo(di)olefinen oder zur Copolymerisation mehrerer der genannten Monomeren, insbesondere zur Herstellung amorpher, weitgehend ataktischer Polymerer.

Die metallorganischen Verbindungen der Formel (I) können als Katalysatoren zur (Co)Polymerisation von C₂-C₁₂-α-Olefinen, C₄-C₂₀-Diolefinen, Cyclo(di)olefinen oder Gemischen mehrerer von ihnen verwendet werden. Monomere der genannten Gruppen sind beispielsweise: Ethylen, Propylen, 1-Butylen, 1-Penten, 1-Hexen, 1-Octen und deren verzweigte Isomere, Isobutylen, 1,3-Butadien, 1,3- oder 1,4-Pentadien, 1,3-, 1,4- oder 1,5-Hexadien, 1,5-Heptadien, Isopren, Chloropren, Norbornen, 5-Ethyliden-2-norbornen, 5-Vinyl-2-norbornen, 4-Vinyl-1-cyclohexen, Dicyclopentadien, 7-Methyl-1,6-octadien und 5,7-Dimethyl-1,6-octadien.

Verbindungen der Formel (I), in denen Y = -Si(R¹R²)-, M¹ = Ti oder Zr und Z = -N(R⁵)- bedeuten, eignen sich insbesondere zur Herstellung von ataktischem Polypropylen.

Die Verbindungen der Formel (I) werden zur (Co)Polymerisation häufig in Kombination mit Cokatalysatoren eingesetzt.

Als Cokatalysatoren kommen die auf dem Gebiet der Metallocene bekannten Cokatalysatoren in Frage, wie polymere oder oligomere Alumoxane, Lewissäuren sowie Aluminate und Borate. In diesem Zusammenhang wird insbesondere verwiesen auf Macromol. Symp. Vol. 97, Juli 1995, S. 1 - 246 (für Alumoxane), sowie auf EP-A1-277 003, EP-A1-277 004, Organometallics 1997, 16, 842-857 (für Borate) und EP-A2-573 403 (für Aluminate).

Insbesondere eignen sich als Cokatalysatoren Methylalumoxan, durch Triisobutylaluminium (TIBA) modifiziertes Methylalumoxan, sowie Diisobutylalumoxan, Trialkylaluminiumverbindungen, wie Trimethylaluminium, Triethylaluminium, Triisobutylaluminium, Triisooctylaluminium, darüber hinaus Dialkylaluminium-Verbindungen wie Diisobutylaluminiumhydrid, Diethylaluminiumchlorid, substituierte Triarylborverbindungen, wie Tris(pentafluorphenyl)boran, sowie ionische Verbindungen, die als Anion Tetrakis(pentafluorphenyl)borat enthalten, wie Triphenylmethyltetrakis(pentafluorphenyl)borat, Trimethylammoniumtetrakis-(pentafluorphenyl)-borat, N,N-Dimethylaniliniumtetrakis(pentafluorphenyl)borat, substituierte Triarylaluminiumverbindungen, wie Tris(pentafluorphenyl)aluminium, sowie ionische Verbindungen, die als Anion Tetrakis(pentafluor-phenyl)aluminat enthalten, wie Triphenylmethyltetrakis(pentafluorphenyl)aluminat, N,N-Dimethylaniliniumtetrakis-(pentafluorphenyl)aluminat.

Selbstverständlich ist es möglich, die Cokatalysatoren im Gemisch untereinander einzusetzen. Die jeweils günstigsten Mischungsverhältnisse sind durch geeignete Vorversuche zu bestimmen.

Solche (Co)Polymerisationen werden in der Gas-, Flüssig- oder Slurryphase ausgeführt. Der Temperaturbereich hierzu reicht von -20°C bis +200°C, bevorzugt 0°C bis 160°C, besonders bevorzugt +20°C bis +80°C; der Druckbereich reicht von 1 bis 50 bar, bevorzugt 3 bis 30 bar. Mitverwendete Lösungsmittel sind beispielsweise: gesättigte Aliphaten oder (Halogen)Aromaten, wie Pentan, Hexan, Heptan, Cyclohexan, Petrolether, Petroleum, hydrierte Benzine, Benzol, Toluol, Xylol, Ethylbenzol, Chlorbenzol und analoge. Diese Reaktionsbedingungen zur (Co)Polymerisation sind dem Fachmann grundsätzlich bekannt.

Wichtige Polymere, die mit den erfindungsgemäßen metallorganischen Verbindungen als Katalysatoren hergestellt werden können, sind solche des Ethylens und Copolymere hiervon. Als Comonomere geeignet sind C₂- bis C₁₂-Alkene, wie Ethylen, 1-Buten, 1-Penten, 1-Hexen, 1-Octen und Arylalkene, wie z.B. Styrol. Ebenfalls geeignete Comonomere sind nichtkonjugierte Diene, wie 1,4-Hexadien, 1,5-Heptadien, 4-Vinyl-1-cyclohexen, 7-Methyl-1,6-octadien und 5,7-Dimethyl-1,6-octadien, 5-Ethyliden-2-norbornen, 5-Vinyl-2-norbornen und Dicyclopentadien. Es ist möglich auch Gemische der genannten Comonomere einzusetzen.

Die so herstellbaren Ethylen(co)polymere besitzen Molekulargewichte mit M_{w} >100 000 g/mol und Molgewichtsverteilungen mit M_{w}/Mₙ <4. Die Ethylen(co)polymere haben intrinsische Viskositäten größer 1 dl/g, bevorzugt größer 2 dl/g. Die Kristallinitäten sind kleiner als 15 %, wobei % Kristallinität = (Schmelzenthalpie/209 J/g) x 100 und die Schmelzenthalpie in J/g mit der DSC-Methode ermittelt wird. Besonders bevorzugt sind Ethylen(co)polymere mit Schmelzenthalpien mit einem Wert von kleiner 5 J/g (DSC-Methode). Die Ethylen(co)polymeren sind gut löslich in gängigen Lösungsmitteln, wie Hexan, Heptan, Diethylether oder Toluol.

In der beschriebenen Weise lassen sich insbesondere auch Kautschuke auf Basis von Ethylen und einem oder mehreren der genannten Comonomere herstellen. Besonders bevorzugt ist die Copolymerisation von Ethylen und Propylen, wobei amorphe Ethylen(co)polymere mit einem Ethylenanteil im Polymeren im Bereich von 30 bis 70 Gew.-%, bevorzugt von 40 bis 65 Gew.-%, erhalten werden.

In der beschriebenen Weise lassen sich auch EPDM-Kautschuke auf Basis von Ethylen, Propylen und einem Dien, vorzugsweise 5-Ethyliden-2-norbomen herstellen. Die EPDM-Kautschuke sind dadurch charakterisiert, dass sie hohe Molekulargewichte und geringe kristalline Anteile aufweisen.

Mit den erfindungsgemäßen metallorganischen Verbindungen lassen sich besonders gut hochmolekulare ataktische Polymere, z. B. ataktisches Polypropylen herstellen.

Beispielsweise kann die (Co)polymerisation von Ethylen mit oder ohne den genannten Comonomeren wie folgt durchgeführt werden: ein Stahlautoklav wird nach den üblichen Reinigungsoperationen mit einem Lösungsmittel und einem Scavenger, z.B. Triisobutylaluminium befüllt. Durch den Scavenger werden mögliche Verunreinigungen und Katalysatorgifte, z.B. Wasser oder andere sauerstoffhaltigen Verbindungen unschädlich gemacht. Dann wird als Katalysatorvorstufe eine Verbindung der Formel (I) zugegeben. Anschließend wird der Reaktor mit Monomeren bis zu einem bestimmten Druck befüllt, auf eine ausgewählte Temperatur thermostatisiert und die Polymerisation durch Zugabe eines oder mehrerer der zuvor genannten Cokatalysatoren gestartet. Die Polymerisation kann in einem kontinuierlichen oder diskontinuierlichen Prozeß erfolgen.

### Beispiele

Die Erfindung wird anhand der nachstehenden Beispiele näher erläutert.

Allgemeine Angaben: Herstellung und Handhabung organometallischer Verbindungen erfolgten unter Ausschluß von Luft und Feuchtigkeit unter Argon-Schutz (Schlenk-Technik). Alle benötigten Lösungsmittel wurden vor Gebrauch durch mehrstündiges Sieden über einem geeigneten Trockenmittel und anschließende Destillation unter Argon absolutiert. Die Verbindungen wurden mit ¹H-NMR, ¹³C-NMR und Infrarotspektroskopie charakterisiert.

### Polymercharakterisierung:

Die intrinsische Viskosität wurde in einem Ubbelohde-Kapillarviskosimeter bei 140°C in o-Dichlorbenzol als Lösungsmittel bestimmt (Mehrpunktmessung). Die DSC-Messungen erfolgten an einem Gerät der Firma Perkin-Elmer mit der Bezeichnung Differential-Scanning-Calorimeter DSC-2 nach folgender Vorschrift: zwei Aufheizungen -90°C, bis +180°C, Heizrate 20K/min, schnelle Abkühlung mit 320K/min auf -90°C, Stickstoffspülung, Einwaagen 12,3 mg Probenmasse in Normkapseln. Die NMR-Messungen zur Bestimmung der Mikrostruktur erfolgten in Tetrachlorethan an einem Gerät der Firma Bruker DRX-400. Die Bestimmung der Mooneyviskosität erfolgte nach ASTM 1646 / DIN 53 523 bei einer Temperatur von 125°C. Die IR-spektroskopische Ermittlung der Polymerzusammensetzung erfolgte gemäß ASTM D 3900.

### Abkürzungen:

- d. Th.: der Theorie
- bez. auf: bezogen auf
- TIBA: Triisobutylaluminium
- I.V.: intrinsische Viskosität
- Tg: Glasübergangstemperatur

### Beispiel 1

### Herstellung von 3-Methylindan-1-on

3-Phenylbuttersäure (26.1 g, 0.159 mol) wird bei 25°C in einer Portion mit Thionylchlorid (28.4 g, 17.3 mL, 0.24 mol) zur Reaktion gebracht. Es wird 4 h zum Rückfluß erhitzt und 15 h bei 25°C gerührt. Das überschüssige Thionylchlorid wird von der Reaktionsmischung destilliert (Sdp.: 79°C). Das erhaltene orangebraune Öl wird in 100 mL Benzol gelöst, und auf 0°C gekühlt. Dazu gibt man portionsweise AlCl₃ (21.0 g, 0.159 mol). Man rührt 0.5 h bei 25°C und erhitzt danach für 1.5 h zum Rückfluß. Nach beendeter Reaktion wird auf 400 mL Eiswasser gegossen und mit konzentrierter Salzsäure auf pH = 1 angesäuert. Nun wird die organische Phase im Scheidetricher abgetrennt, die wässrige Phase einmal mit 30 mL Benzol extrahiert und die vereinigten organischen Phasen über Na₂SO₄ getrocknet. Die flüchtigen Bestandteile werden am Rotationsverdampfer (40°C, 240 mbar) entfernt und der Rückstand im Ölpumpenvakuum bei 78°C destilliert. Es wird eine gelbe Flüssigkeit erhalten.

Ausb.: 21.0 g (0.144 mol, 90 % d. Th. bez. auf 3-Phenylbuttersäure).

^{**1**}**H-NMR** in CDCl₃, 300.0 MHz, [δ]: 1.29 (d, 3 H, ²J_{HH} = 6.0 Hz, CH₃), 2.20 (dd, 1 H, ¹J_{HH} = 21.0 Hz,, ²J_{HH} = 0.9 Hz, CH₂), 2.20 (dd, 1 H, ¹J_{HH} = 21.0 Hz,, ²J_{HH,cis} = 0.9 Hz, CH₂), 2.79 (dd, 1 H, ¹J_{HH} = 21.0 Hz,, ²J_{HH, trans} = 9.0 Hz, CH2), 3.32 (ddd, 1 H, ²J_{HH, trans} = 9.0 Hz, ²J_{HH} = 6.0 Hz, ²J_{HH,cis} = 0.9 Hz, CH-CH₃), 7.25 (pt, 1 H, ²J_{HH} = 9.0 Hz, CH), 7.40 (pd, ²J_{HH} = 3.0 Hz, CH), 7.49 (pt, 1 H, ²J_{HH} = 6.0 Hz, CH), 7.61 (pd, 1 H,, ²J_{HH} = 4.5 Hz, CH).

^{**13**}**C{**^{**1**}**H}-NMR** in CDCl₃, 75.5 MHz, [δ]: 21.0 (CH₃), 32.4 (CH₂), 44.9 (CH-CH₃), 123.0 (CH), 125.0 (CH), 127.0 (CH), 134.4 (CH), 136.0 (Cᵢₚₛₒ), 159.6 (Cᵢₚₛₒ), 205.9 (C , CO).

**IR** (NaCl) in cm⁻¹:3070 (s), 3050 (s), 2961 (s, breit), 1713 (s) [ν_{C=O}], 1605 (s), 1460 (s), 1405 (m), 1375 (w), 1325 (s, breit), 1280 (s, breit), 1241 (m), 1213 (m), 1177 (m), 1151 (m), 1096 (s), 1042 (m), 1012 (m), 760 (s, breit).

### Beispiel 2

### Herstellung von 3-Phenylindan-1-on

3,3-Diphenylpropionsäure (26.0 g, 0.11 mol) wird mit Thionylchlorid (19.6 g, 12 mL, 0.17 mol) versetzt, 4 h zum Rückfluß erhitzt und 15 h bei 25°C gerührt. Nun destilliert man das überschüssige Thionylchlorid ab (Sdp.: 79°C). Es verbleibt ein orangebraunes Öl, welches in 100 mL Benzol gelöst wird. Die erhaltene Lösung wird auf 0°C gekühlt und portionsweise mit AlCl₃ (16.0 g, 0.11 mol) versetzt. Man rührt 0.5 h bei 25°C und erhitzt danach für 1.5 h zum Rückfluß. Nach beendeter Reaktion wird auf 400 mL Eiswasser gegossen und mit konzentrierter Salzsäure der pH-Wert von 1 eingestellt. Die organische Phase wird in einem Scheidetrichter separiert, die wässrige Phase einmal mit 30 mL Benzol extrahiert und die vereinigten organischen Phasen über Na₂SO₄ getrocknet. Die flüchtigen Bestandteile werden am Rotationsverdampfer entfernt und der Rückstand im Ölpumpenvakuum bei 155°C destilliert. Es wird ein oranger Feststoff erhalten.
Ausb.: 15.8 g (0.076 mol, 69 % d. Th. bez. auf 3,3-Diphenylpropionsäure).
**Smp.:** 75°C.
^{**1**}**H-NMR** in CDCl₃, 300.0 MHz, [δ]: 2.70 (dd, 1 H, ¹J_{HH} = 15.0 Hz, ²J_{HH, cis} = 3.0 Hz, CH₂), 3.24 (dd, 1 H, ¹J_{HH} = 15.0 Hz, ²J_{HH, trans} = 9.0 Hz, CH2), 4.58 (dd, 1 H, ²J_{HH, trans} = 9.0 Hz, ²J_{HH, cis} = 3.0 Hz, CH₂), 7.12 (pd, 1 H, ²J_{HH} = 6.0 Hz, C₉H₄), 7.2 - 7.4 ( m, 5 H, C₆H₅), 7.42 (pt, 1 H, ²J_{HH} = 7.5 Hz, CH, C₉H₄), 7.57 (pt, 1 H, ²J_{HH} = 6.6 Hz, CH, C₉H₄), 7.82 (pd, 1 H, ²J_{HH} = 7.5 Hz, CH, C₉H₄).
^{**13**}**C{**^{**1**}**H}-NMR** in CDCl₃, 75.5 MHz, [δ]: 44.3 (CH-C₆H₅), 46.7 (CH₂), 123.3 (CH), 126.8 (CH), 126.9 (CH), 127.5 (CH), 127.5 (CH), 127.8 (CH), 128.5 (CH), 128.8 (CH), 135.0 (CH), 136.6 (Cᵢₚₛₒ), 143.5 (Cᵢₚₛₒ), 157.9(Cᵢₚₛₒ), 206.0 (C, CO).
**IR** (KBr) in cm⁻¹: 3054 (m), 3028 (m), 2912 (w), 1704 (s, breit) [ν_{C=O}], 1596 (s, breit), 1454 (s), 1400 (w), 1317 (w), 1272 (s, breit), 1235 (m), 1192 (m), 750 (s, breit), 968 (s).

### Beispiel 3

### Herstellung von 1,3-Dimethylinden

Dazu wurde das in Beispiel 1 hergestellte 3-Methylindan-1-on (21.0 g, 0.144 mol) wird in 20 mL Diethylether gelöst und zu einer Lösung von Methylmagnesiumjodid in Diethylether (Die Grignardlösung wird durch Zutropfen von Methyljodid (25.4 g, 11.3 mL, 0.18 mol) in eine Suspension von Magnesiumpulver (4.4 g , 0.18 mol) in 40 mL Diethylether hergestellt.) getropft. Nach 2 h unter Rückfluß wird auf 100 mL Eiswasser gegossen. Man säuert mit 5 N Salzsäure an, bis sich die ausgefallenen Magnesiumsalze gelöst haben. Von der organische Phase wird abgetrennt und die wässerige Phase zweimal mit je 50 mL Diethylether extrahiert. Die vereinigten organischen Phasen werden mit je 30 mL einer gesättigten NaHCO₃-Lösung, Wasser und anschließend mit gesättigter NaCl-Lösung gewaschen. Danach wird die organische Phase von allen flüchtigen Bestandteilen am Rotationsverdampfer (40°C, 1013 mbar) befreit und der Rückstand in 120 mL Benzol aufgenommen. Nach Zugabe von p-Toluolsulfonsäure (400 mg, 2.3 mmol) wird am Wasserabscheider 2 h unter Rückfluß gekocht. Die Lösung wird mit 20 mL gesättigter NaHCO₃-Lösung gewaschen, die organische Phase abgetrennt und über Na₂SO₄ getrocknet. Danach wird die organische Phase von allen flüchtigen Bestandteilen am Rotationsverdampfer (40°C, 240 mbar) befreit und der Rückstand im Ölpumpenvakuum bei 51°C destilliert.
Ausb.: 12.0 g (0.0833 mol, 58 % d. Th. bez. auf 3-Methylindan-1-on).
^{**1**}**H-NMR** in CDCl₃, 300.0 MHz, [δ]: 1.31 (d, 3 H, ²J_{HH} = 9.0 Hz, CH₃), 2.16 (s, 3 H, CH₃), 3.43 (q, 1 H, ²J_{HH} = 9.0 Hz, CH-CH₃), 6.16 (s, 1 H, CH₃-C=CH), 7.2 - 7.4 (m, 4 H, CH, C₉H₅).
^{**13**}**C{**^{**1**}**H}-NMR** in CDCl₃, 75.5 MHz, [δ]: 12.9 (CH₃), 16.2 (CH₃), 43.6 (CH-CH₃), 118.8 (CH), 122.4 (CH), 124.6 (CH), 126.2 (CH), 136.0 (CH₃C=CH), 138.0 (Cᵢₚₛₒ, C-CH₃), 145.2 (Cᵢₚₛₒ, C₉H₅), 149.7 (Cᵢₚₛₒ, C₉H₅).
**IR** (KBr) in cm⁻¹: 3053 (s), 2963 (s, breit), 1615 (s), 1455 (s), 1374 (s), 1071 (s), 1018 (s), 927 (s).

### Beispiel 4

### Herstellung von 1,3-Diphenylinden

3-Phenylindan-1-on aus Beispiel 2 (21.0 g, 0.144 mol) wird in 20 mL Diethylether gelöst und zu einer Lösung von Phenylmagnesiumbromid in Diethylether (Die Grignardlösung wird durch Zutropfen von Phenylbromid (11.9 g, 8.8 mL, 0.0758 mol), gelöst in 25 mL Diethylether, zu Magnesiumpulver (2.02 g, 0.0758 mol) in 25 mL Diethylether hergestellt.) getropft. Nun wird 1.5 h zum Rückfluß erhitzt, weitere 15 h bei 25°C gerührt und danach auf 100 mL Eiswasser gegossen. Man säuert mit 5 N Salzsäure an bis sich die gebildeten Magnesiumsalze gelöst haben. Die organische Phase wird separiert und die wässerige Phase zweimal mit je 50 mL Diethylether extrahiert. Die vereinigten organischen Phasen werden mit je 30 mL gesättigter NaHCO₃-Lösung, Wasser und anschließend mit gesättigter NaCl-Lösung gewaschen. Danach wird die organische Phase von allen flüchtigen Bestandteilen am Rotationsverdampfer befreit (40°C, 1013 mbar) und der Rückstand in 120 mL Benzol aufgenommen. Nach Zugabe von p-Toluolsulfonsäure (400 mg, 2.3 mmol) wird am Wasserabscheider 3 h unter Rückfluß gekocht. Die Lösung wird mit 20 mL gesättigter NaHCO₃-Lösung gewaschen, die organische Phase mittels Scheidetrichter abgetrennt und über Na₂SO₄ getrocknet. Danach wird die organische Phase von allen flüchtigen Bestandteilen am Rotationsverdampfer erneut befreit. Die Reinigung des Rückstandes erfolgt durch eine Säulenchromatographie mit Kieselgel als stationäre Phase und Petrolether als mobile Phase (Säulendurchmesser: 3.0 cm, Füllhöhe: 20 cm). Man erhält einen farblosen Festkörper.
Ausb.: 16.8 g (0.064 mol, 85 % d. Th. bez. auf 3-Phenylindan-1-on).
**Smp.**: 71 °C.
^{**1**}**H-NMR** in CDCl_{3,} 300.0 MHz, [δ]: 4.78 (s, 1 H, CH-C₆H₅), 6.72 (s, 1 H, =CH-CH), 7.2-7.8 (m, 14 H, CH).
^{**13**}**C{**^{**1**}**H}-NMR** in CDCl₃, 75.5 MHz, [δ]: 55.4 (CH-C₆H₅), 120.5 (CH), 124.3 (CH), 125.6 (CH), 126.6 (CH), 126.7 (CH), 126.8 (CH), 127.7 (CH), 127.8 (CH), 127.8 (CH), 127.9 (CH), 128.0 (CH), 128.6 (CH), 128.6 (CH), 128.8 (CH), 135.6 (Cᵢₚₛₒ, C₆H₅), 139.5 (Cᵢₚₛₒ, C₆H₅), 143.1 (Cᵢₚₛₒ, C₉H₅), 144.6 (Cᵢₚₛₒ, C₉H₅), 149.2 (Cᵢₚₛₒ, =C-C₆H₅).
**IR** (KBr) in cm⁻¹: 3059 (s), 3024 (s), 1489 (s), 1445 (s), 1345 (m), 1181 (m), 1153 (m), 1071 (s).

### Beispiel 5

### Herstellung von 2-Brom-1,3-dimethylinden

1,3-Dimethylinden aus Beispiel 3 (4.9 g, 0.0343 mol) wird bei 25°C in 150 mL Diethylether gelöst. Bei 0°C wird Brom (5.5 g, 1.76 mL, 0.0345 mol) tropfenweise zugegeben. Nach 3 h Rühren bei 25°C werden alle flüchtigen Bestandteile im Ölpumpenvakuum entfernt. Es wird ein braunes Öl erhalten. Die Reinigung erfolgt durch eine Säulenchromatographie mit Kieselgel als stationäre Phase und eine Mischung aus Hexan und Methylenchlorid (10:1) als mobile Phase (Säulendurchmesser: 3.0 cm, Füllhöhe: 20 cm). Man erhält ein hellgelbes Öl.
Ausb.: 7.4 g (0.033 mol, 97 % d. Th. bez. auf 1,3-Dimethylinden).
**Anal.** Ber. für C₁₁H₁₁Br (223.11): C, 59.22; H, 4.97. Gef.: C, 59.18; H, 4.94.
^{**1**}**H-NMR** in CDCl₃, 300.0 MHz, [δ]: 1.36 (d, 3 H, ²J_{HH} = 7.5 Hz, CH₃), 2.12 (s, 3 H, CH₃), 3.43 (q, 1 H,, ²J_{HH} = 7.5 Hz, CH-CH₃), 7.2 - 7.4 (m, 4 H, CH, C₉H₅).
^{**13**}**C{**^{**1**}**H}-NMR** in CDCl₃, 75.5 MHz, [δ]: 12.4 (CH₃), 16.7 (CH₃), 48.9 (CH-CH₃), 119.1 (CH), 122.8 (CH), 125.5 (CH), 127.2 (CH), 129.9 (Cᵢₚₛₒ, C-Br), 137.0 (Cᵢₚₛₒ, C-CH₃), 144.0 (Cᵢₚₛₒ, C₉H₅), 147.8 (Cᵢₚₛₒ, C₉H₅).
**IR** (NaCl) in cm⁻¹: 3068 (m), 3017 (m), 2970 (s), 2928 (s), 2868 (m), 1617 (s), 1459 (s), 1377 (m), 1281 (m), 995 (s).

### Beispiel 6

### Herstellung von 2-Brom-1,3-diphenylinden

Das in Beispiel 4 dargestellte 1,3-Diphenylinden (5.0 g, 0.0186 mol) wird bei 25°C in 150 mL Diethylether gelöst. Bei 0°C wird Brom (2.98 g, 0.96 mL, 0.0186 mol) tropfenweise zugegeben. Nach 3 h Rühren bei 25°C werden alle flüchtigen Bestandteile im Ölpumpenvakuum entfernt. Es wird ein viskoses, braunes Öl erhalten. Die Reinigung erfolgt durch eine Säulenchromatographie mit Kieselgel als stationäre Phase und einer Mischung aus Hexan und Methylenchlorid (10:1) als mobile Phase (Säulendurchmesser: 3.0 cm, Füllhöhe: 20 cm). Man erhält einen farblosen Feststoff.

Für die Röntgenstrukturanalyse konnten geeignete Einkristalle durch Kristallisation bei 25°C aus Petrolether erhalten werden.
Ausb.: 6.3 g (0.0182 mol, 98 % d. Th. bez. auf 1,3-Diphenylinden).
**Anal.** Ber. für C₂₁H₁₅Br (347.25): C, 72.64; H, 4.35. Gef.: C, 72.78; H, 4.39.
**Smp.:** 82°C
^{**1**}**H-NMR** in CDCl_{3,} 300.0 MHz, [δ]: 4.76 (s, 1 H, CH-C₆H₅), 7.2- 7.7 (m, 14 H, CH, C₆H₅ und C₉H₅).
^{**13**}**C{**^{**1**}**H}-NMR** in CDCl₃, 62.9 MHz, [δ]: 61.5 (CH-C₆H₅), 120.5 (CH), 124.5 (CH), 126.3 (CH), 127.6 (CH), 127.9 (CH), 128.7 (CH), 128.8 (CH), 129.0 (CH), 129.0 (CH), 129.1 (CH), 129.2 (CH), 129.3 (CH), 129.5 (CH), 129.52 (Cᵢₚₛₒ, C-Br), 133.9 (Cᵢₚₛₒ, C-C₆H₅), 138.5 (Cᵢₚₛₒ, C₆H₅), 143.0 (Cᵢₚₛₒ, C₆H₅), 143.6 (Cᵢₚₛₒ, C₉H₅), 147.7 (Cᵢₚₛₒ, C₉H₅).
**IR** (KBr) in cm⁻¹: 3066 (m), 3025 (m), 1592 (s, breit), 1489 (m), 1450 (s), 1291 (w, breit), 1274 (w, breit), 1071 (m), 1027 (m).

### Beispiel 7

### Herstellung von 2-(^{t}Butylaminodimethylsilyl)-1,3-dimethylinden

Dazu wurde das in Beispiel 5 erhaltene 2-Brom-1,3-dimethylinden (2.5 g, 0.0112 mol) in 5 mL Tetrahydrofuran gelöst und zu einer Mischung aus Magnesiumpulver (0.5 g, 0.02 mol) und Dichlordimethylsilan (3.9 g, 3.6 mL, 0.03 mol) in 15 mL Tetrahydrofuran getropft. Dabei siedet die Lösung (Anm.: Ist keine spontane Erwärmung der Reaktionslösung zu bemerken, so läßt sich diese durch Zugabe weniger Tropfen 1,2-Dibromethan auslösen). Man läßt 15 h bei 25°C rühren und entfernt danach alle flüchtigen Bestandteile im Ölpumpenvakuum. Nun werden 40 mL Petrolether zugegeben und die erhaltene Suspension zur Entfernung des Magnesiumsalzes filtriert. Vom erhaltenen Filtrat werden alle flüchtigen Bestandteile im Ölpumpenvakuum entfernt. Man löst das erhaltene hellgelbe Öl in 30 mL Diethylether und kühlt auf 0°C. Nun gibt man über NaH getrocknetes ^{t}Butylamin (2.16 g, 3.1 mL, 0.0296 mol) zu. Es wird 15 h bei 25°C gerührt und anschließend alle flüchtigen Bestandteile im Ölpumpenvakuum entfernt. Danach werden 40 mL Petrolether addiert und von ausgefallenem Ammoniumsalz filtriert. Nach Entfernung des Lösungsmittels im Ölpumpenvakuum wird das erhaltene hellgelbe Öl im Ölpumpenvakuum in einer Kugelrohrdestillationsaparatur bei 170°C destilliert. Man erhält ein farbloses Öl.
Ausb.: 1.0 g (3.66 mmol, 32 % d. Th. bez. auf 2-Brom-1,3-dimethylinden).
**Anal.** Ber. für C₁₇H₂₇NSi (273.49): C, 74.66; H, 9.95. Gef.: C, 74.21; H, 9.60.
^{**1**}**H-NMR** in CDCl₃, 250.0 MHz, [δ]: 0.25 (s, 3 H, SiCH₃), 0.28 (s, 3 H, SiCH₃), 1.08 (s, 9 H, C(CH₃), 1.25 (d, 3 H, ²J_{HH} = 10.0 Hz, CH₃), 2.21 (s, 3 H, CH₃), 3.45 (q, 1 H, ²J_{HH} = 10.0 Hz, CH-CH₃), 7.1-7.3 (m, 4 H, CH).
^{**13**}**C{**^{**1**}**H}-NMR** in CDCl₃, 62.9 MHz, [δ]: 3.1 (SiCH₃), 3.7 (SiCH₃), 13.9 (CH₃), 18.1 (CH₃), 33.8 (C(CH₃)₃), 48.9 (CH-CH₃) 49.7 (C(CH₃)₃), 118.9 (CH), 122.4 (CH), 125.2 (CH), 126.3 (CH), 146.3 (=C-CH₃), 147.3(Cᵢₚₛₒ, C₉H₅), 147.8 (Cᵢₚₛₒ, C₉H₅), 152.4 (C-Si).
**IR** (NaCl) in cm⁻¹: 3382 (s) [ν_{NH}], 3064 (s), 2956 (s, breit), 2867 (s), 1593 (m), 1556 (s), 1372 (s), 1297 (w), 1251 (s) [ν_{SiC}], 1226 (s), 1094 (s, breit), 1025 (s, breit), 842 (s, breit).

### Beispiel 8

### Herstellung von 2-(^{t}Butylaminodimethylsilyl)-1,3-diphenylinden

2-Brom-1,3-diphenylinden (Beispiel 6) (2.5 g, 0.0072 mol) wird in 5 mL Tetrahydrofuran gelöst und zu einer Mischung aus Magnesiumpulver (0.35 g, 0.0144 mol) und Dichlordimethylsilan (2.8 g, 2.6 mL, 0.0216 mol) in 10 mL Tetrahydrofuran getropft. Dabei siedet die Lösung. Man läßt 15 h bei 25°C rühren und entfernt danach alle flüchtigen Bestandteile im Ölpumpenvakuum. Nun werden 40 mL Petrolether addiert und das Magnesiumsalz durch Filtration durch eine G3-Fritte abgetrennt. Vom erhaltenen Filtrat werden alle flüchtigen Bestandteile im Ölpumpenvakuum entfernt. Man löst das erhaltene hellgelbe Öl in 30 mL Diethylether und kühlt auf 0°C. Nun wird über NaH getrocknetes ^{t}Butylamin (2.16 g, 3.1 mL, 0.0296 mol) zugegeben. Es wird 15 h bei 25°C gerührt, wobei sich ^{t}BuNH₂·HCl abscheidet. Anschließend werden alle flüchtigen Bestandteile im Ölpumpenvakuum entfernt. Danach gibt man 40 mL Petrolether zum Rückstand und filtiert vom ausgefallenen ^{t}BuNH₂·HCl durch eine G4-Fritte. Nach Entfernung des Lösungsmittels im Ölpumpenvakuum wird das erhaltene hellgelbe Öl im Ölpumpenvakuum in einer Kugelrohrdestillationsaparatur bei 254°C destilliert. Man erhält ein viskoses, farbloses Öl.
Ausb.: 1.36 g (3.4 mmol, 48 % d. Th. bez. auf 2-Brom-1,3-diphenylinden).
**Anal.** Ber. für C₂₇H₃₁NSi (397.63): C, 81.56; H, 7.86. Gef.: C, 81.13; H, 7.64.
^{**1**}**H-NMR** in CDCl₃, 250.0 MHz, [δ]: -0.11 (s, 3 H, SiCH₃), 0.00 (s, 3 H, SiCH₃), 0.97 (s, 9 H, C(CH₃), 4.88 (s, 1 H, CH-C₆H₅), 7.1-7.3 (m, 10 H, CH), 7.4-7.8 (m, 4 H, CH).
^{**13**}**C{**^{**1**}**H}-NMR** in CDCl₃, 62.9 MHz, [δ]: 3.2 (SiCH₃), 4.0 (SiCH₃), 33.6 (C(CH₃)₃), 49.5 (C(CH₃)₃), 60.9 (CH-C₆H₅), 120.6 (CH), 123.9 (CH), 125.6 (CH), 126.0 (CH), 126.8 (CH), 126.8 (CH), 127.5 (CH), 127.8 (CH), 128.0 (CH), 128.2 (CH), 128.4 (CH), 128.5 (CH), 128.7 (CH), 129.6 (CH), 137.9 (Cᵢₚₛₒ, C₆H₅), 140.7 (Cᵢₚₛₒ, C₆H₅). 146.2 (Cᵢₚₛₒ, C₉H₄), 149.5 (Cᵢₚₛₒ, C₉H₄), 152.1 (Cᵢₚₛₒ, C-C₆H₅), 154.5 (C-Si).
**IR** (NaCl) in cm⁻¹: 3382 (s) [ν_{NH}], 3064 (s), 2956 (s, breit), 2867 (s), 1593 (m), 1556 (s), 1372 (s), 1297 (w), 1251 (s) [ν_{SiC}], 1226 (s), 1094 (s, breit), 1025 (s, breit), 842 (s, breit).

### Beispiel 9

### Herstellung von 2-(Cyclopentadienyldimethylsilyl)-1,3-dimethylinden

Das in Beispiel 5 erhaltene 2-Brom-1,3-dimethylinden (2.5 g, 0.0112 mol) wird in 5 mL Tetrahydrofuran gelöst und zu einer Mischung bestehend aus Magnesiumpulver (0.5 g, 0.02 mol) und Dichlordimethylsilan (3.9 g, 3.6 mL, 0.03 mol) in 15 mL Tetrahydrofuran getropft. Dabei siedet die Lösung. Man läßt 15 h bei 25°C rühren und entfernt danach alle flüchtigen Bestandteile im Ölpumpenvakuum. Nun werden 40 mL Petrolether zugegeben und das Magnesiumsalz durch Filtration durch eine G3-Fritte abgetrennt. Vom erhaltenen Filtrat werden alle flüchtigen Bestandteile im Ölpumpenvakuum entfernt. Man löst das erhaltene hellgelbe Öl in 30 mL Diethylether und kühlt auf 0°C. Nun wird Cyclopentadienylnatrium (1.0 g, 0.0112 mol) gelöst in 10 mL Tetrahydrofuran addiert. Es wird 15 h bei 25°C gerührt und anschließend alle flüchtigen Bestandteile im Ölpumpenvakuum entfernt. Danach werden 35 mL Petrolether zugegeben und von ausgefallenem NaCl durch Kieselgur (G4-Fritte) filtriert. Die Reinigung des Rückstandes erfolgt über eine Säulenchromatographie mit Kieselgel als stationäre Phase und eine Mischung aus Hexan und Methylenchlorid (10:1) als mobile Phase (Säulendurchmesser: 3.0 cm, Füllhöhe: 20 cm). Es wird ein hellgelbes Öl erhalten.
Ausb.: 0.856 g (3.2 mmol, 29 % d. Th. bez. auf 2-Brom-1,3-dimethylinden).
**Anal.** Ber. für C₁₈H₂₂Si (266.46): C, 81.12; H, 8.34. Gef.: C, 81.25; H, 8.17.
^{**1**}**H-NMR** in CDCl₃, 250.0 MHz, [δ]: 0.00 (s, 3 H, SiCH₃), 0.15 (s, 3 H, SiCH₃), 1.25 (d, 3 H, ³J_{HH} = 10.0 Hz, CH₃), 2.28 (s, 3 H, CH₃), 3.40 (q, 1 H, ³J_{HH} = 10.0 Hz, CH-CH₃), 3.52 (s, 1 H, CH-Si(CH₃)₂), 6.5-6.7 (m, 4 H, C₅H₅), 6.9-7.1 (m, 4 H, C₉H₄).
^{**13**}**C{**^{**1**}**H}-NMR** in CDCl₃, 62.9 MHz, [δ]: -3.1 (SiCH₃), -2.0 (SiCH₃), 13.0 (CH₃), 15.4 (CH₃), 48.0 (CH-CH₃), 50.0 (CH-Si), 119.0 (CH), 122.4 (CH), 125.3 (CH), 126.6 (CH), 130.8 (=CH, C₅H₅), 133.1 (=CH, C₅H₅), 144.2 (Cᵢₚₛₒ), 145.9 (Cᵢₚₛₒ), 148.9 (Cᵢₚₛₒ, C-CH₃), 152.2 (Cᵢₚₛₒ, C-Si).
**IR** (NaCl) in cm⁻¹: 3066 (s), 3016 (s), 2960 (s), 2868 (s), 1939 (w), 1899 (w), 1792 (w), 1590 (m), 1557 (s), 1464 (s), 1338 (s), 1250 (s) [ν_{SiC}], 1118 (s), 973 (s), 950 (s), 907 (s).

### Beispiel 10

### Herstellung von 2-(Cyclopentadienyldimethylsilyl)-1,3-diphenylinden

2-Brom-1,3-diphenylinden (2.5 g, 0.0072 mol) aus Beispiel 6 wird in 5 mL Tetrahydrofuran gelöst und zu einer Mischung bestehend aus Magnesiumpulver (0.35 g, 0.0144 mol) und Dichlordimethylsilan (2.8 g, 2.6 mL, 0.0216 mol) in 10 mL Tetrahydrofuran getropft. Dabei siedet die Lösung. Man läßt 15 h bei 25°C rühren und entfernt danach alle flüchtigen Bestandteile im Ölpumpenvakuum. Es werden 40 mL Petrolether zugegeben und die erhaltene Suspension zur Entfernung des Magnesiumsalzes durch eine G4 Fritte filtriert. Vom erhaltenen Filtrat werden alle flüchtigen Bestandteile im Ölpumpenvakuum entfernt. Man löst das erhaltene hellgelbe Öl in 20 mL Diethylether und kühlt auf 0°C. Nun wird Cyclopentadienylnatrium (0.634 g, 0.0072 mol), gelöst in 5 mL Tetrahydrofuran, zugegeben. Es wird 15 h bei 25°C gerührt und anschließend alle flüchtigen Bestandteile im Ölpumpenvakuum entfernt. Danach werden 35 mL Petrolether zugegeben und vom ausgefallenen Natriumchlorid filtriert. Die Reinigung des Rückstandes erfolgt durch eine Säulenchromatographie mit Kieselgel als stationäre Phase und eine Mischung aus Hexan und Methylenchlorid (10:1) als mobile Phase (Säulendurchmesser: 3.0 cm, Füllhöhe: 20 cm). Es wird ein hellgelbes, viskoses Öl erhalten.
Ausb.: 0.98 g (2.5 mol, 35 % d. Th. bez. auf 2-Brom-1,3-diphenylinden).
**Anal.** Ber. für C₂₈H₂₆Si (390.60): C, 86.06; H, 6.72. Gef.: C, 85.98; H, 6.75.
^{**1**}**H-NMR** in CDCl₃, 250.0 MHz, [δ]: -0.25 (s, 3 H, SiCH₃), 0.00 (s, 3 H, SiCH₃), 3.35 (s, 1 H, CH-Si), 5.05 (s, 1 H, CH-C₆H₅), 6.5-6.7 (m, 4 H, C₅H₅), 7.2 - 7.7 (m, 4 H, C₉H₄).
^{**13**}**C{**^{**1**}**H}-NMR** in CDCl₃, 62.9 MHz, [δ]: -3.9 (SiCH₃), -1.6 (SiCH₃), 42.5 (CH-Si), 61.1 (CH-C₆H₅), 120.6 (CH), 123.9 (CH), 125.6 (CH), 126.0 (CH), 126.8 (CH), 126.8 (CH), 127.5 (CH), 127.8 (CH), 128.0 (CH), 128.2 (CH), 128.4 (CH), 128.5 (CH), 128.7 (CH), 129.6 (CH), 130.8 (=CH, C₅H₅), 133.1 (=CH, C₅H₅), 137.9 (Cᵢₚₛₒ, C₆H₅), 140.7 (Cᵢₚₛₒ, C₆H₅), 146.2 (Cᵢₚₛₒ, C₉H₅), 149.5 (Cᵢₚₛₒ, C₉H₅), 152.1 (Cᵢₚₛₒ, C-C₆H₅), 154.5 (C-Si).
**IR** (NaCl) in cm⁻¹: 3027 (s), 2961 (s), 2879 (s), 1951 (m), 1882 (m), 1809 (m), 1759 (m), 1599 (s), 1499 (s), 1455 (s), 1336 (s), 1288 (s), 1274 (s), 1257 (s) [ν_{SiC}], 1192 (s), 1159 (s), 1087 (s), 1029 (s), 1001 (s), 919 (s), 884 (s), 774 (s).

### Beispiel 11

### Herstellung von 2-(^{t}Butylaminodimethylsilyl)-1,3-dimethylindentitandichlorid

Das in Beispiel 7 hergestellte 2-(^{t}Butylaminodimethylsilyl)-1,3-dimethylinden (0.68 g, 2.48 mmol) wird in 10 mL Petrolether gelöst und bei -78°C mit einer 2.5 N Lösung von n-BuLi in Hexan (2.1 mL, 4.96 mmol) metalliert. Bei -50°C fällt ein gelber Feststoff aus. Man läßt im Kühlbad innerhalb 3 h auf 25°C erwärmen. Die überstehende Füssigkeit wird vom ausgefallenen Dilithiumsalz pipettiert und der Rückstand im Ölpumpenvakuum getrocknet.

TiCl₃ 3 THF (0.918 g, 2.48 mmol) wird in 5 mL Tetrahydrofuran suspendiert und auf -78°C gekühlt. Man löst das Dilitiumsalz in 10 mL Tetrahydrofuran und kühlt auf -78°C. Diese Lösung wird zu der TiCl₃·3THF Suspension mit einer Kanüle transferiert. Die Reaktionsmischung erwärmt man innerhalb von 3 h auf 25°C. Hierbei wechselt die Farbe der Reaktionsmischung von gelb nach rot. Nun wird AgCl (0.720 g, 4.96 mmol) in einer Portion zugegeben. Man rührt 0.75 h bei 25°C und entfernt dann alle flüchtigen Bestandteile im Ölpumpenvakuum. Man nimmt den Rückstand in 30 mL Toluol auf und filtiert die Reaktionsmischung durch Kieselgur (G4-Fritte). Nach Entfernen des Toluols im Ölpumpenvakuum wird mit 20 mL Petrolether versetzt, wobei ein rotbrauner Feststoff ausfällt. Die überstehende Flüssigkeit wird vom Feststoff dekantiert. Der Rückstand wird im Ölpumpenvakuum getrocknet. Man erhält ein rotbraunes Pulver.
Ausb.: 0.55 g (1.41 mmol, 57 % d. Th. bez. auf 2-(^{t}Butylaminodimethylsilyl)-1,3-dimethylinden).
**Anal.** Ber. für C₁₇H₂₅Cl₂NSiTi (390.27): C, 52.32; H, 6.46. Gef.: C, 52.00; H, 6.26.
**Smp.:** 146°C
^{**1**}**H-NMR** in CDCl_{3,} 250.0 MHz, [δ]: 0.80 (s, 6 H, SiCH₃), 1.30 (s, 9 H, C(CH₃), 2.45 (s, 6 H, CH₃), 7.35 (dd, 2 H, ²J_{HH} = 7.4 H, ³J_{HH} = 3.5 H, C₉H₄), 7.60 (dd, 2 H, ²J_{HH} = 7.4 H, ³J_{HH} = 3.5 H, C₉H₄).
^{**13**}**C{**^{**1**}**H}-NMR** in CDCl₃, 62.9 MHz, [δ]: 5.8 (Si(CH₃)₂), 16.4 (CH₃), 33.7 (C(CH₃)₃), 64.3 (C(CH₃)₃), 123.1 (CH), 124.8 (C-Si), 127.9 (CH), 134.2 (Cᵢₚₛₒ, C₉H₄), 135.1 (Cᵢₚₛₒ, C₉H₄).
**IR** (CaF₂, gelöst in CDCl₃) in cm⁻¹: 3057 (m), 2970 (s), 2929 (s), 2874 (s), 1589 (s, breit), 1499 (m), 1462 (m), 1448 (m), 1403 (m), 1380 (m), 1364 (m), 1293 (w), 1256 (s) [ν_{SiC}], 1216 (m), 1182 (s), 1102 (m), 1028 (m, breit), 981 (s), 930 (s).

### Beispiel 12

### Herstellung von 2-(^{t}Butylaminodimethylsilyl)-1,3-diphenylindenzirconiumdichlorid

Dazu wurde das in Beispiel 8 hergestellte 2-(^{t}Butylaminodimethylsilyl)-1,3-diphenylinden (0.705 g, 1.77 mmol) in 10 mL Petrolether gelöst und bei -78°C mit einer 2.5 M Lösung von ⁿBuLi in Hexan (1.5 mL, 3.55 mmol) metalliert. Bei -50°C fällt ein gelber Feststoff aus. Man läßt im Kühlbad innerhalb 3 h auf 25°C erwärmen. Die überstehende Flüssigkeit wird vom ausgefallenen Dilithiumsalz pipettiert und zweimal mit je 10 mL Petrolether gewaschen. Danach wird der Rückstand im Ölpumpenvakuum getrocknet.

Anschließend löst man das Dilithiumsalz Li₂{2-(1,3-Ph₂C₉H₅)SiMe₂NH^{t}Bu} in 8 mL Toluol und kühlt auf -78°C. Zirconiumtetrachlorid (0.412 g, 1.77 mmol) wird in 8 mL Toluol suspendiert und zu der Lösung des oben dargestellten Dilithiumsalzes gegeben. Die Reaktionsmischung erwärmt man innerhalb von 3 h auf 25°C, wobei die Farbe der Reaktionsmischung von hellgelb nach gelborange wechselt. Man läßt 15 h bei 25°C rühren und filtiert die Reaktionsmischung durch Kieselgur (G4-Fritte). Nach Entfernen des Toluols im Ölpumpenvakuum wird mit 15 mL Petrolether versetzt, wobei ein gelber Feststoff ausfällt. Die überstehende Flüssigkeit wird vom Feststoff dekantiert und der Rückstand im Ölpumpenvakuum getrocknet. Man erhält ein gelbes Pulver.

Ausb.: 0.6 g (1.07 mmol, 61 % d. Th. bez. auf 2-(^{t}Butylaminodimethylsilyl)-1,3-diphenylinden).
**Smp.:** 125°C.
^{**1**}**H-NMR** in CDCl₃, [δ]: 0.00 (s, 6 H, SiMe₂), 1.27 (s, 9 H, CMe₃), 7.28 (dd, 2 H, ²J_{HH} = 7.6 Hz, ³J_{HH} = 3.4 Hz, C₉H₄), 7.4 - 7.5 (m, 10 H, C₆H₅), 7.66 (dd, 2 H, ²J_{HH} = 7.6 Hz, ³J_{HH} = 3.4 Hz, C₉H₄).
^{**13**}**C{**^{**1**}**H}-NMR** in CDCl₃, [δ]: 5.3 (SiMe₂), 33.4 (C(CH₃)₃), 58.8 (C(CH₃)₃), 122.5 (CH, C₉H₄), 127.4 (CH, C₉H₄), 128.5 (CH, C₆H₅), 128.5 (CH, C₆H₅), 129.7 (CH, C₆H₅), 134.0 (CSi, C₉H₄), 132.4 (Cᵢₚₛₒ, C₆H₅), 134.8 (Cᵢₚₛₒ, C₉H₄), 134.9 (Cᵢₚₛₒ, C₉H₄).
**IR** (CaF₂, gelöst in CDCl₃) in cm⁻¹: 3061 (m, breit), 2958 (s, breit), 2929 (s), 2870 (s), 1954 (w), 1900 (w), 1811(w), 1598 (s, breit), 1497 (m), 1460 (m,), 1450 (m), 1402 (m), 1384 (m), 1364 (m), 1293 (w), 1256 (s) [ν_{SiC}], 1185 (s), 1099 (m), 1077 (s), 1029 (s,), 991 (s).

### Beispiel 13

### Herstellung von 2-(Cyclopentadienyldimethylsilyl)-1,3-dimethylindenziconocendichlorid

2-(Cyclopentadienyldimethylsilyl)-1,3-dimethylinden (0.53 g, 1.99 mmol) aus Beispiel 9 wird in 10 mL Diethylether gelöst und bei -78°C mit einer 2.5 N Lösung von n-BuLi in Hexan (1.6 mL, 3.98 mol) metalliert. Nach Erwärmen auf 25°C wird weitere 4 h gerührt. Danach werden alle flüchtige Bestandteile im Ölpumpenvakuum entfernt, der Rückstand zweimal mit je 15 mL Petrolether gewaschen und das Dilithiumsalz in 15 mL Toluol suspendiert. Nun wird auf -20°C gekühlt. Man gibt Zircontetrachlorid (0.465 g, 2.00 mmol), suspendiert in 10 mL Toluol, zu und rührt 15 h bei 25°C. Nun werden alle flüchtigen Bestandteile im Ölpumpenvakuum entfernt, der Rückstand mit 5 mL Petrolether gewaschen und im Ölpumpenvakuum der Petrolether entfernt. Nun gibt man 30 mL Methylenchlorid zu und filtiert die Lösung zur Entfernung aller unlöslichen Bestandteile durch Kieselgur durch eine G4-Fritte. Nach Entfernung des Methylenchlorids im Ölpumpenvakuum erhält man einen zitronengelben Feststoff.
Ausb.: 0.44 g (1.03 mmol, 52 % d. Th. bez. auf 2-(Cyclopentadienyldimethylsilyl)-1,3-dimethylinden).
**Anal.** Ber. für C₁₈H₂₀Cl₂SiZr (426.56): C, 50.68 ; H, 4.74. Gef.: C, 51.04; H, 4.75.
**Smp.:** ab 155 °C (stetige Zersetzung ohne Schmelzen).
^{**1**}**H-NMR** in CDCl₃, 250.0 MHz, [δ]: 0.90 (s, 6 H, Si(CH₃)₂), 2.30 (s, 6 H, CH₃), 5.85 (pt, 2 H, J_{HH} = 2.4 H, C₅H₄), 6.80 (pt, 2 H, J_{HH} = 2.4 H, C₅H₄), 7.25 (dd, 2 H, ²J_{HH} = 7.5 H, ³J_{HH} = 3.7 H, C₉H₄), 7.48 (dd, 2 H, ²J_{HH} = 7.5 H, ³J_{HH} = 3.7 H, C₉H₄).
^{**13**}**C{**^{**1**}**H}-NMR** in CDCl₃, 62.9 MHz, [δ]: -0.5 (Si(CH₃)₂), 14.7 (CH₃), 113.9 (CH, Cp), 117.0 (C-Si, C₅H₄), 124.0 (CH, C₅H₄), 126.2 (CH, C₉H₄), 128.2 (CH, C₉H₄), 137.5 (Cᵢₚₛₒ, C₉H₄), 140.0 (Cᵢₚₛₒ, C-CH₃), 145.0 (C-Si, C₉H₄).
**IR** (KBr) in cm⁻¹: 3178 (s, breit), 3066 (s), 2962 (s), 1951 (w), 1918 (w), 1895 (w), 1867 (w), 1774 (w), 1746 (w), 1648 (m, breit), 1459 (w), 1394 (m), 1365 (m), 1259 (m) [ν_{SiC}], 1166 (m), 1051 (m), 838 (s), 816 (s), 744 (s).

### Beispiel 14

### Herstellung von 2-(Cyclopentadienyldimethylsilyl)-1,3-diphenylindenzirconocendichlorid

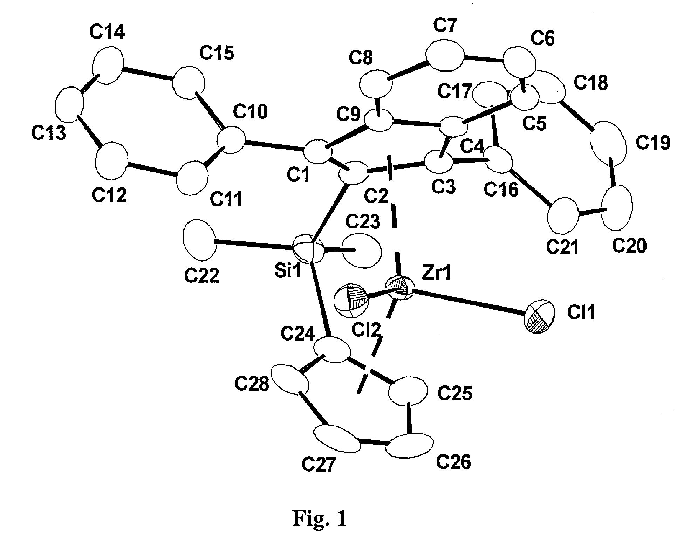

Das in Beispiel 10 hergestellte 2-(Cyclopentadienyldimethylsilyl)-1,3-diphenylinden (0.81 g, 2.077 mmol) wird in 25 mL Diethylether gelöst und bei -78°C mit einer 2.5 N Lösung von n-BuLi in Hexan (1.7 mL, 4.15 mol) metalliert. Nach Erwärmen auf 25°C wird weitere 4 h gerührt. Danach werden alle flüchtige Bestandteile im Ölpumpenvakuum entfernt, der Rückstand zweimal mit je 15 mL Petrolether gewaschen und in 20 mL Toluol suspendiert. Nun wird auf -20°C gekühlt. Man gibt Zirconiumtetrachlorid (0.48 g, 2.06 mmol), suspendiert in 15 mL Toluol, zu und rührt 15 h bei 25°C. Es werden alle flüchtigen Bestandteile im Ölpumpenvakuum entfernt, der Rückstand mit 10 mL Petrolether gewaschen und anschließend im Ölpumpenvakuum getrocknet. Nun gibt man 30 mL Methylenchlorid zu und filtiert die Lösung zur Entfernung aller unlöslichen Bestandteile durch Kieselgur (G4-Fritte). Nach Entfernung des Methylenchlorids im Ölpumpenvakuum erhält man einen kanariengelben Feststoff. Für die Röntgenstrukturanalyse (Fig. 1) konnten geeignete Einkristalle durch Kristallisation bei -20°C aus Methylenchlorid erhalten werden.
Ausb.: 1.033 g (1.87 mmol, 90 % d. Th. bez. auf 2-(Cyclopentadienyldimethylsilyl)-1,3-diphenylinden).
**Anal.** Ber. für C₂₈H₂₄Cl₂SiZr (550.71): C, 61.06; H, 4.40. Gef.: C, 60.86; H, 4.10.
**Smp.:** 129°C.
^{**1**}**H-NMR** in CDCl_{3,} 250.0 MHz, [δ]: 0.00 (s, 6 H, Si(CH₃)₂), 5.62 (pt, 2 H, J_{HH} = 2.4 H, C₅H₄), 6.85 (pt, 2 H, J_{HH} = 2.4 H, C₅H₄), 7.0 - 7.2 (m, 6 H, C₆H₅), 7.25 (dd, 2 H, ²J_{HH} = 7.5 H, ³J_{HH} = 3.7 H, C₉H₄), 7.2 - 7.3 (m, 6 H, C₆H₅), 7.45 (dd, 2 H, ²J_{HH} = 7.5 H, ³J_{HH} = 3.7 H, C₉H₄).
^{**13**}**C{**^{**1**}**H}-NMR** in CDCl₃, 62.9 MHz, [δ]: 0.0 (Si(CH₃)₂), 113.0 (C-Si, C₅H₄).115.2 (CH, C₅H₄), 124.4 (CH, C₅H₄), 127.2 (CH, C₉H₄), 128.8 (CH, C₉H₄), 128.9 (CH, C₆H₅), 129.4 (CH, C₆H₅), 129.7 (CH, C₆H₅), 132.0 (Cᵢₚₛₒ, C-C₆H₅), 133.8 (Cᵢₚₛₒ, C₆H₅), 135.6 (Cᵢₚₛₒ, C₉H₅), 140.0 (C-Si, C₉H₅).
**IR** (KBr) in cm⁻¹: 3397 (s, breit), 1945 (w), 1906 (w), 1864 (w), 1822 (w), 1745 (w), 1628 (m, breit), 1599 (w), 1498 (w), 1445 (w), 1385 (w), 1254 (m) [ν_{SiC}], 1178 (m), 1073 (m), 1047 (m), 1001 (m), 846 (s), 820 (s), 798 (s), 758 (s).

### Beispiel 15

### Terpolymerisation von Ethylen, Propylen und 5-Ethyliden-2-norbornen (ENB)

In einen 1,4-1-Stahl-Autoklaven, der mit einem mechanischen Rührer, Manometer, Temperaturfühler, einer Temperatursteuervorrichtung, einer Katalysatorschleuse und Monomerdosiervorrichtungen für Ethylen und Propylen ausgestattet ist, wurden 500 ml Hexan und 1 ml TIBA vorgelegt. Hierzu wurde eine Lösung von 2,0 mg (5 µmol) 2-(^{t}Butylaminodimethylsilyl)-1,3-dimethylindentitandichlorid aus Beispiel 11 in 2,5 ml Toluol gegeben. Die Innentemperatur wurde mit einem Thermostaten auf 30°C eingestellt. Anschließend wurden 15 g Ethylen und 14.4 g Propylen zudosiert. Durch Zugabe einer Lösung von 37 mg (40 µmol) Triphenylmethyl-tetrakis(pentafluorphenyl)borat in 8 ml Toluol wurde die Polymerisation gestartet. Dann wurden über eine Druckschleuse 5 ml ENB zugegeben. Ethylen und Propylen wurden im Massenverhältnis von 50:50 kontinuierlich zudosiert, so dass der Druck bei 30°C konstant 6 bar betrug. Nach 25 Minuten Polymerisationsdauer wurde der Autoklav entspannt. Zur Aufarbeitung wurde das Polymer in Methanol ausgefällt, und 20 h bei 60°C im Vakuum getrocknet, wobei 41,1 g Copolymer erhalten wurden. Die IR-spektroskopische Ermittlung der Zusammensetzung des Copolymeren ergab einen Einbau von 47,3 Gew.-% Ethylen, 46.8 Gew.-% Propylen und 6.3 Gew.-% ENB. Es wurde ein gummiartiges Polymer erhalten, welches einen Mooney-Wert von 28.2 besitzt.

### Beispiel 16

### Terpolymerisation von Ethylen, Propylen und 5-Ethyliden-2-norbornen (ENB)

In einen 1,4-1-Stahl-Autoklaven, der mit einem mechanischen Rührer, Manometer, Temperaturfühler, einer Temperatursteuervorrichtung, einer Katalysatorschleuse und Monomerdosiervorrichtungen für Ethylen und Propylen ausgestattet ist, wurden 500 ml Hexan und 1 ml TIBA vorgelegt. Hierzu wurde eine Lösung von 2,0 mg (5 µmol) 2-(^{t}Butylaminodimethylsilyl)-1,3-dimethylindentitandichlorid aus Beispiel 11 in 2,5 ml Toluol gegeben. Die Innentemperatur wurde mit einem Thermostaten auf 60°C eingestellt. Anschließend wurden 11 g Ethylen und 10 g Propylen zudosiert. Durch Zugabe einer Lösung von 4.6 mg (5 µmol) Triphenylmethyl-tetrakis(pentafluorphenyl)borat in 1 ml Toluol wurde die Polymerisation gestartet. Dann wurden über eine Druckschleuse 5 ml ENB zugegeben. Ethylen und Propylen wurden im Massenverhältnis von 50:50 kontinuierlich zudosiert, so dass der Druck bei 60°C konstant 6 bar betrug. Nach 20 Minuten Polymerisationsdauer wurde erneut eine Lösung von 46 mg (50 µmol) Triphenylmethyl-tetrakis(pentafluorphenyl)-borat in 10 ml Toluol in den Autoklaven dosiert. Nach insgesamt 50 Minuten Polymerisationsdauer wurde der Autoklav entspannt. Zur Aufarbeitung wurde das Polymer in Methanol ausgefällt, und 20 h bei 60°C im Vakuum getrocknet, wobei 37,1 g Copolymer erhalten wurden. Die IR-spektroskopische Ermittlung der Zusammensetzung des Copolymeren ergab einen Einbau von 47,6 Gew.-% Ethylen, 44,6 Gew.-% Propylen und 8,5 Gew.-% ENB. Es wurde ein gummiartiges Polymer erhalten, welches einen Mooney-Wert von 105.2 besitzt.

### Beispiel 17 (Vergleichsbeispiel mit (2-IndSiMe₂N^{t}Bu)TiCl₂:

### Terpolymerisation von Ethylen, Propylen und 5-Ethyliden-2-norbornen (ENB)

In einen 1,4-1-Stahl-Autoklaven, der mit einem mechanischen Rührer, Manometer, Temperaturfühler, einer Temperatursteuervorrichtung, einer Katalysatorschleuse und Monomerdosiervorrichtungen für Ethylen und Propylen ausgestattet ist, wurden 500 ml Hexan und 1 ml TIBA vorgelegt. Hierzu wurde eine Lösung von 5.4 mg (15 µmol) 2-(^{t}Butylaminodimethylsilyl)-indentitandichlorid in 7,5 ml Toluol gegeben. Die Innentemperatur wurde mit einem Thermostaten auf 30°C eingestellt. Anschließend wurden 17,2 g Ethylen und 15,3 g Propylen zudosiert. Durch Zugabe einer Lösung von 55,3 mg (60 µmol) Triphenylmethyl-tetrakis(pentafluorphenyl)-borat in 12 ml Toluol wurde die Polymerisation gestartet. Dann wurden über eine Druckschleuse 5 ml ENB zugegeben. Ethylen und Propylen wurden im Massenverhältnis von 50:50 kontinuierlich zudosiert, so dass der Druck bei 30°C konstant 6 bar betrug. Nach 40 Minuten Polymerisationsdauer wurde der Autoklav entspannt. Zur Aufarbeitung wurde das Polymer in Methanol ausgefällt, und 20 h bei 60°C im Vakuum getrocknet, wobei 43,8 g Copolymer erhalten wurden. Es wurde ein gummiartiges Polymer erhalten, welches einen Mooney-Wert von 22,6 besitzt.

### Beispiel 18 (Vergleichsbeispiel mit (Me₄CpSiMe₂N^{t}Bu)TiCl₂)

### Terpolymerisation von Ethylen, Propylen und 5-Ethyliden-2-norbornen (ENB)

In einen 1,4-1-Stahl-Autoklaven, der mit einem mechanischen Rührer, Manometer, Temperaturfühler, einer Temperatursteuervorrichtung, einer Katalysatorschleuse und Monomerdosiervorrichtungen für Ethylen und Propylen ausgestattet ist, wurden 500 ml Hexan und 1 ml TIBA vorgelegt. Hierzu wurde eine Lösung von 5.4 mg (15 µmol) 2-(^{t}Butylaminodimethylsilyl)-tetramethylcyclopentadientitandichlorid in 7,5 ml Toluol gegeben. Die Innentemperatur wurde mit einem Thermostaten auf 30°C eingestellt. Anschließend wurden 17,2 g Ethylen und 15,3 g Propylen zudosiert. Durch Zugabe einer Lösung von 55,3 mg (60 µmol) Triphenylmethyl-tetrakis(pentafluorphenyl)borat in 12 ml Toluol wurde die Polymerisation gestartet. Dann wurden über eine Druckschleuse 5 ml ENB zugegeben. Ethylen und Propylen wurden im Massenverhältnis von 50:50 kontinuierlich zudosiert, so dass der Druck bei 30°C konstant 6 bar betrug. Nach 40 Minuten Polymerisationsdauer wurde der Autoklav entspannt. Zur Aufarbeitung wurde das Polymer in Methanol ausgefällt, und 20 h bei 60°C im Vakuum getrocknet, wobei 43,8 g Copolymer erhalten wurden. Es wurde ein gummiartiges Polymer erhalten, welches einen Mooney-Wert von 22,6 besitzt.

### Beispiel 19 (Vergleichsbeispiel mit (2-Tetrahydroindacenyl)SiMe₂N^{t}Bu)TiCl₂;

### Terpolymerisation von Ethylen, Propylen und 5-Ethyliden-2-norbornen (ENB)

In einen 1,4-1-Stahl-Autoklaven, der mit einem mechanischen Rührer, Manometer, Temperaturfühler, einer Temperatursteuervorrichtung, einer Katalysatorschleuse und Monomerdosiervorrichtungen für Ethylen und Propylen ausgestattet ist, wurden 500 ml Hexan und 1 ml TIBA vorgelegt. Hierzu wurde eine Lösung von 2.0 mg (10 µmol) 2-(^{t}Butylaminodimethylsilyl)-tetrahydroindacentitandichlorid in 2,5 ml Toluol gegeben. Die Innentemperatur wurde mit einem Thermostaten auf 60°C eingestellt. Anschließend wurden 13,3 g Ethylen und 12,9 g Propylen zudosiert. Durch Zugabe einer Lösung von 37 mg (40 µmol) Triphenylmethyl-tetrakis(pentafluorphenyl)borat in 20 ml Toluol wurde die Polymerisation gestartet. Dann wurden über eine Druckschleuse 5 ml ENB zugegeben. Ethylen und Propylen wurden im Massenverhältnis von 50:50 kontinuierlich zudosiert, so dass der Druck bei 60°C konstant 6 bar betrug. Nach 60 Minuten Polymerisationsdauer wurde der Autoklav entspannt. Zur Aufarbeitung wurde das Polymer in Methanol ausgefällt, und 20 h bei 60°C im Vakuum getrocknet, wobei 21 g Copolymer erhalten wurden.

### Beispiel 20 (Vergleichsbeispiel mit (Me₄CpSiMe₂N^{t}Bu)TiCl₂)

### Terpolymerisation von Ethylen, Propylen und 5-Ethyliden-2-norbornen (ENB)

In einen 1,4-1-Stahl-Autoklaven, der mit einem mechanischen Rührer, Manometer, Temperaturfühler, einer Temperatursteuervorrichtung, einer Katalysatorschleuse und Monomerdosiervorrichtungen für Ethylen und Propylen ausgestattet ist, wurden 500 ml Hexan und 1 ml TIBA vorgelegt. Hierzu wurde eine Lösung von 1,8 mg (5 µmol) 2-(^{t}Butylaminodimethylsilyl)-tetramethylcyclopentadientitandichlorid in 2,5 ml Toluol gegeben. Die Innentemperatur wurde mit einem Thermostaten auf 60°C eingestellt. Anschließend wurden 9,9 g Ethylen und 8,9 g Propylen zudosiert. Durch Zugabe einer Lösung von 25,3 mg (27,5 µmol) Triphenylmethyl-tetrakis(pentafluorphenyl)borat in 11 ml Toluol wurde die Polymerisation gestartet. Dann wurden über eine Druckschleuse 5 ml ENB zugegeben. Ethylen und Propylen wurden im Massenverhältnis von 50:50 kontinuierlich zudosiert, so dass der Druck bei 60°C konstant 6 bar betrug. Nach 40 Minuten Polymerisationsdauer wurde der Autoklav entspannt. Zur Aufarbeitung wurde das Polymer in Methanol ausgefällt, und 20 h bei 60°C im Vakuum getrocknet, wobei 36,9 g Copolymer erhalten wurden. Es wurde ein gummiartiges Polymer erhalten, welches einen Mooney-Wert von 24,7 besitzt.

### Beispiel 21

### Copolymerisation von Ethylen und Propylen

In einen 1,4-1-Stahl-Autoklaven, der mit einem mechanischen Rührer, Manometer, Temperaturfühler, einer Temperatursteuervorrichtung, einer Katalysatorschleuse und Monomerdosiervorrichtungen für Ethylen und Propylen ausgestattet ist, wurden 500 ml Toluol und 1 ml TIBA vorgelegt. Hierzu wurde eine Lösung von 1,4 mg (2,5 µmol) 2-(Cyclopentadienyldimethylsilyl)-1,3-diphenylindenzirconocendichlorid aus Beispiel 14 in 1,25 ml Toluol gegeben. Die Innentemperatur wurde mit einem Thermostaten auf 40°C eingestellt. Anschließend wurden 30,5 g Propylen (2,8 bar) und 13,5 g Ethylen (Gesamtdruck bis 7 bar) zudosiert. Durch Zugabe einer Lösung von 4.6 mg (5 µmol) Triphenylmethyl-tetrakis(pentafluorphenyl)borat in 2,5 ml Toluol wurde die Polymerisation gestartet. Während der Polymerisation stieg die Innentemperatur auf 53°C an. Nach 12 Minuten Polymerisationsdauer wurde der Autoklav entspannt. Zur Aufarbeitung wurde das Polymer in Methanol ausgefällt und 20 h bei 60°C im Vakuum getrocknet, wobei 32,9 g Copolymer erhalten wurden. Es wurde ein gummiartiges Polymer erhalten. Die IR-spektroskopische Ermittlung der Zusammensetzung des Copolymeren ergab einen Einbau von 72,0 Gew.-% Ethylen und 28,0 Gew.-% Propylen. Mit der DSC-Methode wurde ein Tg von -46°C ermittelt. Die Messung der intrinsischen Viskosität ergab einen Wert von I.V. = 1,8 dl/g.

## Patentansprüche

1. Verfahren zur Herstellung von metallorganischen Verbindungen von Übergangsmetallen mit in 1,3-Position disubstituierten 2-Indenyl als Liganden, welche der allgemeinen Formel (I) entsprechen, 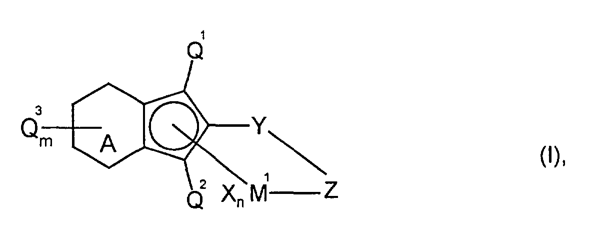 worin
A das Benzosystem oder das Tetrahydrocyclohexylsystem bedeutet,
Q¹, Q² gleich oder verschieden sind und als Substituent des in 1,3-Position substituiertem 2-Indenylsystems Wasserstoff, C₁-C₄-Alkyl, C₆-C₁₄-Aryl, C₇-C₁₀-Aralkyl, C₁-C₄-Alkoxy, C₁-C₄-Alkylthio, Phenoxy, Phenylthio, Di-C₁-C₄-alkyl-amino, C₆-C₁₄-Aryl-C₁-C₄-alkyl-amino, Di-C₆-C₁₄-aryl-amino, Dibenzylamino, Tri-C₁-C₄-alkyl-silyl, Di-C₁-C₄-alkyl-boranyl, Phenyl-C₁-C₄-alkyl-boranyl, Diphenylboranyl, Di-C₁-C₄-alkyl-phosphoryl, Diphenylphosphoryl oder Phenyl-C₁-C₄-alkyl-phosphoryl bedeuten,
Q³ gleich oder verschieden sind und als Substituent des in 4, 5, 6, 7-Position substituiertem 2-Indenylsystems Wasserstoff, C₁-C₄-Alkyl, C₆-C₁₄-Aryl, C₇-C₁₀-Aralkyl, C₁-C₄-Alkoxy, C₁-C₄-Alkylthio, Phenoxy, Phenylthio, Di-C₁-C₄-alkyl-amino, C₆-C₁₄-Aryl-C₁-C₄-alkyl-amino, Di-C₆-C₁₄-aryl-amino, Dibenzylamino, Tri-C₁-C₄-alkylsilyl, Di-C₁-C₄-alkyl-boranyl, Phenyl-C₁-C₄-alkyl-boranyl, Diphenylboranyl, Di-C₁-C₄-alkyl-phosphoryl, Diphenylphosphoryl oder Phenyl-C₁-C₄-alkyl-phosphoryl bedeuten,
M¹ ein Übergangsmetall aus der 4., 5. oder 6. Gruppe des Periodensystems der Elemente nach IUPAC 1985 ist,
X ein Anion bedeutet,
n eine Zahl von Null bis Vier ist, die sich aus der Valenz und dem Bindungszustand von M¹ ergibt,
m eine Zahl von Null bis Vier ist, die sich aus der Zahl der Reste Q³ ergibt,
Y eine Brücke aus der Gruppe von -C(R¹R²)-, -Si(R¹R²)-, -Ge(R¹R²)-, -C(R¹R²)-C(R³R⁴)-, -C(R¹R²)-Si(R³R⁴)- oder -Si(R¹R²)-Si(R³R⁴)-darstellt, worin R¹, R², R³ und R⁴ unabhängig voneinander Wasserstoff, Halogen, geradkettiges oder verzweigtes C₁-C₁₀-Alkyl, C₅-C₈-Cycloalkyl, C₆-C₁₄-Aryl oder C₇-C₁₀-Aralkyl bedeuten, und
Z ein zweiter Ligand aus der Gruppe von offenkettigen und cyclischen, gegebenenfalls anionischen π-Systemen, -N(R⁵)-, -P(R⁶)-, |N(R⁵R⁷)-, |P(R⁶R⁸)-, -O-, -S-, |OR⁵- oder |SR⁵- ist, wobei der senkrechte Strich links vom Elementsymbol N, P, O bzw. S ein Elektronenpaar bedeutet und die Bindung zwischen Z und M¹ ionischen, kovalenten oder koordinativen Charakter hat und worin R⁵, R⁶, R⁷ und R⁸ unabhängig voneinander den Bedeutungsumfang von R¹ bis R⁴ haben und R⁵ und R⁷ zusätzlich -Si(R¹R²R³) bedeuten können und R⁶ und R⁸ zusätzlich -Si(R¹R²R³), -OR¹, -SR¹ oder -N(R¹R²) bedeuten können,
**dadurch gekennzeichnet, dass** man ein in 1,3 Position substituiertes Halogeninden der Formel 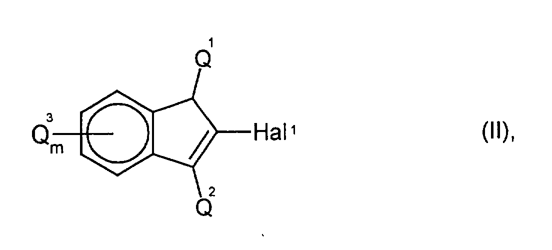 in der
Hal¹ für Cl, Br oder I steht und Q¹, Q² und Q³ die obige Bedeutung haben,
mit einem elementaren Metall ausgewählt aus der 1., 2. oder 12. Gruppe des Periodensystems nach IUPAC 1985 oder einer entsprechenden Metallverbindung in einer Menge im Bereich von 1 bis 100 Mol elementares Metall/Metallverbindung pro Mol (II) mit einem Dihalogenid der Brücke Y der Formel
Hal² - Y - Hal³ (III),
in der
Hal² und Hal³ unabhängig voneinander Cl, Br oder I bedeuten und
Y den obigen Bedeutungsumfang hat,
in einer Menge von 1 bis 20 Mol (III) pro Mol (II) umsetzt, wobei in dem Fall, dass Y die Bedeutung -Si(R¹R²)-, -Ge(R¹R²)- oder -Si(R¹R²)-Si(R³R⁴)-hat, die Umsetzung von (II) mit (i) elementares Metall/Metallverbindung und (ii) mit (III) auch simultan erfolgen kann, und das Reaktionsprodukt der Formel 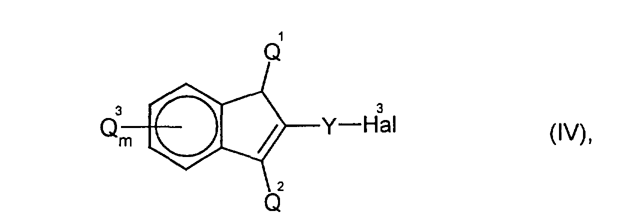 worin Q¹, Q², Q³, Y, Hal³ und m die obige Bedeutung haben,
gegebenenfalls nach seiner Isolierung mit einem Z-Derivat der Formel
ZM²ₚ (Va) oder ZR⁹ₚ (Vb),
in welcher
M² für Li, Na, K oder -MgHal⁴, worin Hal⁴ den Bedeutungsumfang von Hal² hat, steht,
p die Zahl Eins oder Zwei darstellt,
R⁹ Wasserstoff, -Si(R¹R²R³) oder Sn(R¹R²R³) darstellt und
Z, R¹, R² und R³ die obige Bedeutung haben,
unter Austritt einer Verbindung der Formel
M²Hal³ (VIa) bzw. R⁹Hal³ (VIb),
in welcher M², R⁹ und Hal³ die obige Bedeutung haben,
gegebenenfalls in Gegenwart einer Hilfsbase zur 2-Indenyl-Verbindung der Formel 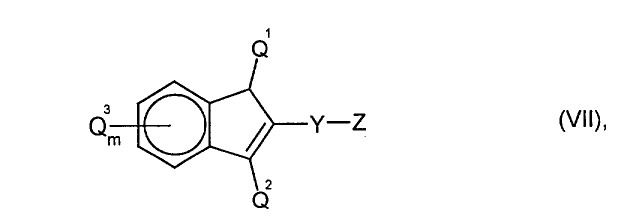 in der Q¹, Q², Q³, Y, Z und m die obige Bedeutung haben und die als Dianion vorliegen kann und in der Z weiterhin M², R⁹ oder ein Elektronenpaar tragen kann,
und dann weiter mit einer Übergangsmetallverbindung der Formel
M¹X_{q} (VIII),
umsetzt, in der M¹ und X die obige Bedeutung haben und
q eine Zahl von Zwei bis Sechs ist, die sich aus der Oxidationsstufe von M¹ ergibt.

2. Verfahren nach Anspruch 1, **dadurch gekennzeichnet, dass** Y eine Brücke aus der Gruppe -Si(R¹R²)-, -Ge(R¹R²)- und -Si(R¹R²)-Si(R³R⁴)-, bevorzugt -Si(R¹R²)- ist und die Umsetzung von (II) mit (i) einer elementaren Metall/Metallverbindung und (ii) mit (III) zum Reaktionsprodukt simultan erfolgt.

3. Verfahren nach Anspruch 1 und/oder 2, **dadurch gekennzeichnet, dass** man als elementares Metall Mg oder Zn oder ein Gemisch aus Mg und Zn einsetzt.

4. Verfahren nach einem oder mehreren der Ansprüche 1 bis 3, **dadurch gekennzeichnet, dass** M¹ ein Übergangsmetall aus der Gruppe Ti, Zr, Hf, V, Nb, bevorzugt von Ti, Zr, Hf, besonders bevorzugt von Ti, Zr ist.

5. Verfahren nach einem oder mehreren der Ansprüche 1 bis 4, **dadurch gekennzeichnet, dass** 1 bis 10 Mol elementarem Metall/Metallverbindung pro Mol (II) und 1 bis 10 Mol (III) pro Mol (II) eingesetzt werden.

6. Metallorganische Verbindungen von Übergangsmetallen mit in 1,3-Position substituierten 2-Indenyl als Liganden, welche der allgemeinen Formel (I) entsprechen, 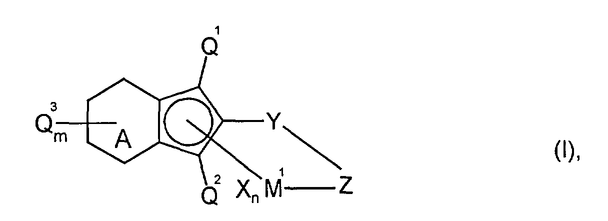 worin
A das Benzosystem oder das Tetrahydrocyclohexylsystem bedeutet,
Q¹, Q² gleich oder verschieden sind und als Substituent des in 1,3-Position substituiertem 2-Indenylsystems Wasserstoff, C₁-C₄-Alkyl, C₆-C₁₄-Aryl, C₇-C₁₀-Aralkyl, C₁-C₄-Alkoxy, C₁-C₄-Alkylthio, Phenoxy, Phenylthio, Di-C₁-C₄-alkyl-amino, C₆-C₁₄-Aryl-C₁-C₄-alkyl-amino, Di-C₆-C₁₄-aryl-amino, Dibenzylamino, Tri-C₁-C₄-alkylsilyl, Di-C₁-C₄-alkyl-boranyl, Phenyl-C₁-C₄-alkyl-boranyl, Diphenylboranyl, Di-C₁-C₄-alkyl-phosphoryl, Diphenylphosphoryl oder Phenyl-C₁-C₄-alkyl-phosphoryl bedeuten,
Q³ gleich oder verschieden sind und als Substituent des in 4, 5, 6, 7 -Position substituiertem 2-Indenylsystems Wasserstoff, C₁-C₄-Alkyl, C₆-C₁₄-Aryl, C₇-C₁₀-Aralkyl, C₁-C₄-Alkoxy, C₁-C₄-Alkylthio, Phenoxy, Phenylthio, Di-C₁-C₄-alkyl-amino, C₆-C₁₄-Aryl-C₁-C₄-alkyl-amino, Di-C₆-C₁₄-aryl-amino, Dibenzylamino, Tri-C₁-C₄-alkylsilyl, Di-C₁-C₄-alkyl-boranyl, Phenyl-C₁-C₄-alkyl-boranyl, Diphenylboranyl, Di-C₁-C₄-alkyl-phosphoryl, Diphenylphosphoryl oder Phenyl-C₁-C₄-alkyl-phosphoryl bedeuten,
M¹ ein Übergangsmetall aus der 4., 5. oder 6. Gruppe des Periodensystems der Elemente nach IUPAC 1985 ist,
X ein Anion bedeutet,
n eine Zahl von Null bis Vier ist, die sich aus der Valenz und dem Bindungszustand von M¹ ergibt,
m eine Zahl von Null bis Vier ist, die sich aus der Zahl der Reste Q³ ergibt,
Y eine Brücke aus der Gruppe von -C(R¹R²)-, -Si(R¹R²)-, -Ge(R¹R²)-, -C(R¹R²)-C(R³R⁴)-, -C(R¹R²)-Si(R³R⁴)- oder -Si(R¹R²)-Si(R³R⁴)-darstellt, worin R¹, R², R³ und R⁴ unabhängig voneinander Wasserstoff, Halogen, geradkettiges oder verzweigtes C₁-C₁₀-Alkyl, C₅-C₈-Cycloalkyl, C₆-C₁₄-Aryl oder C₇-C₁₀-Aralkyl bedeuten, und
Z ein zweiter Ligand aus der Gruppe von offenkettigen und cyclischen, gegebenenfalls anionischen π-Systemen, -N(R⁵)-, -P(R⁶)-, |N(R⁵R⁷)-, |P(R⁶R⁸)-, -O-, -S-, |OR⁵- oder |SR⁵- ist, wobei der senkrechte Strich links vom Elementsymbol N, P, O bzw. S ein Elektronenpaar bedeutet und die Bindung zwischen Z und M¹ ionischen, kovalenten oder koordinativen Charakter hat und worin R⁵, R⁶, R⁷ und R⁸ unabhängig voneinander den Bedeutungsumfang von R¹ bis R⁴ haben und R⁵ und R⁷ zusätzlich -Si(R¹R²R³) bedeuten können und R⁶ und R⁸ zusätzlich -Si(R¹R²R³), -OR¹, -SR¹ oder -N(R¹R²) bedeuten können.

7. Metallorganische Verbindungen von Übergangsmetallen nach Anspruch 6, worin in Formel (I) an die Stelle von Z der zweite Ligand Z' tritt, der die Bedeutung substituiertes oder nicht substituiertes Cyclopentadienyl, substituiertes oder nicht substituiertes 1-Indenyl, substituiertes oder nicht substituiertes 2-Indenyl, substituiertes oder nicht substituiertes Fluorenyl, -N(R⁵)-, -P(R⁶)-, |N(R⁵R⁷)-, |P(R⁶R⁸)-, -O-, -S-, |OR⁵- oder |SR⁵- hat, worin R⁵ bis R⁸ und die senkrechten Striche die in Anspruch 5 genannte Bedeutung haben.

8. Metallorganische Verbindungen von Übergangsmetallen nach Anspruch 7, worin in Formel (I) an die Stelle von Z' der zweite Ligand Z" tritt, der die Bedeutung -N(R⁵)- oder |N(R⁵R⁷)- hat, wobei bevorzugt in Formel (I) weiterhin Y = -Si(R¹R²)- und M¹ = Ti oder Zr bedeuten, wobei R¹, R², R⁵ und R⁷ sowie der senkrechte Strich neben dem Elementsymbol N die in Anspruch 5 genannte Bedeutung haben.

9. 2-(^{t}Butylaminodimethylsilyl)-1,3-diphenylindenzirconiumdichlorid und 2-(^{t}Butylaminodimethylsilyl)-1,3-dimethylindentitandichlorid.

10. Zwischenprodukte der Formel 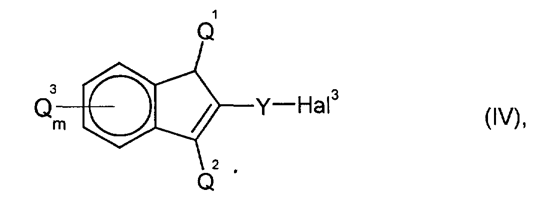 in der
worin Q¹, Q², Q³, Y, Hal³ und m die in Anspruch 1 genannte Bedeutung haben.

11. Verfahren zur Herstellung der Zwischenprodukte der Formel (IV) aus Anspruch 10, das **dadurch gekennzeichnet ist, dass** man ein in 1,3-Position disubstituiertes 2-Halogeninden der Formel 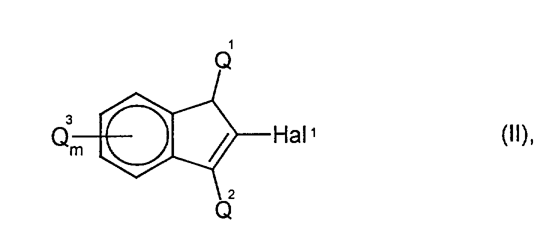 in der
Hal¹ für Cl, Br oder I steht und Q¹, Q², Q³ sowie m die in Anspruch 1 genannte Bedeutung haben,
mit einem elementaren Metall ausgewählt aus der 1., 2. oder 12. Gruppe des Periodensystems der Elemente nach IUPAC 1985 oder einer entsprechenden Metallverbindung in einer Menge im Bereich von 1 bis 100 Mol Metall/Metallverbindung pro Mol (II) und mit einem Dihalogenid von Y der Formel
Hal²-Y-Hal³ (III),
in der
Y, Hal² und Hal³ die in Anspruch 1 genannte Bedeutung haben,
in einer Menge von 1 bis 20 Mol (III) pro Mol (II) umsetzt, wobei in dem Fall, dass Y die Bedeutung -Si(R¹R²)-, -Ge(R¹R²)- oder -Si(R¹R²)-Si(R³R⁴)-hat, die Umsetzung von (II) mit (i) elementarem Metall/Metallverbindung und (ii) mit (III) auch simultan erfolgen kann.

12. Verwendung der Verbindungen nach Anspruch 7, 8 oder 9 als Katalysatoren zur Polymerisation von Monomeren aus der Gruppe von C₂-C₁₂-α-Olefinen, C₄-C₂₀-Diolefinen und Cyclo(di)olefinen oder zur Copolymerisation mehrerer der genannten Monomeren.

13. Verwendung nach Anspruch 13 zur Herstellung amorpher, im wesentlichen ataktischen Polymeren.

14. Verwendung der Verbindung nach Anspruch 9 zur Herstellung von EP(D)M.

15. Verwendung der Verbindung nach Anspruch 9 zur Herstellung von ataktischem Polypropylen.
